# EUROPEAN PATENT SPECIFICATION

(11) **EP 2 789 724 B1**
(45) Date of publication and mention of the grant of the patent: **12.10.2016**
(21) Application number: 14152406.6
(22) Date of filing: 24.01.2014
(51) Int. Cl.: D06F 37/22, D06F 37/24

(54) **Washing machine**
Waschmaschine
Machine à laver

(30) Priority: 25.01.2013 KR 20130008722
(43) Date of publication of application: 15.10.2014
(73) Proprietor: Samsung Electronics Co., Ltd, Gyeonggi-do 16677 (KR)
(72) Inventor: Rou, Doo Young, Gyeonggi-do (KR); Jung, Won Young, Seoul (KR); Cho, Young Jin, Gyeonggi-do (KR); Kang, Jeong Hoon, Seoul (KR)
(74) Representative: Walaski, Jan Filip

(56) References cited:
- EP-A1- 2 752 516
- EP-A2- 2 441 872
- WO-A1-2014/116016
- KR-A- 20080 037 428

## Description

The present invention relates to a washing machine having a balancer to offset unbalanced load generated during rotation of a drum.

A washing machine is a machine that washes clothes using electric power. Generally, the washing machine includes a cabinet forming the external appearance of the washing machine, a tub to contain wash water in the cabinet, a drum rotatably installed in the tub, and a motor to rotate the drum. When the drum is rotated by the motor in a state in which laundry is put in the drum together with detergent water, contaminants are removed from the laundry by friction between the laundry and the drum and between the laundry and wash water. If the laundry is not uniformly distributed in the drum but accumulates at one side during rotation of the drum, vibration and noise are generated due to eccentric rotation of the drum. According to circumstances, parts, such as the drum or the motor, of the washing machine may be damaged.

For this reason, the washing machine has a balancer that offsets unbalanced load generated in the drum to stabilize rotation of the drum.

EP2752516 discloses a balancer for a washing machine, the balancer including a channel having masses movably disposed therein. The balancer includes a magnet on the rear surface of the balancer to restrain the movement of the mass along the channel.

It is an aspect of the present disclosure to provide a balancer with improved performance and a washing machine having the same. Additional aspects of the disclosure will be set forth in part in the description which follows and, in part, will be apparent from the description, or may be learned by practice of the disclosure.

In accordance with an aspect of the present invention, there is provided a washing machine according to claim 1.

In accordance with one aspect of the present disclosure, a balancer, mounted to a drum of a washing machine to offset unbalanced load generated in the drum during rotation of the drum, includes a balancer housing coupled to the drum, the balancer housing having an annular channel defined therein, at least one mass movably disposed in the channel, at least one magnet to restrain movement of the mass along the channel when rotational speed of the drum is within a predetermined range, and at least one magnet fixing member to receive and fix the magnet, the magnet fixing member being coupled to an outside of the balancer housing.

The magnet fixing member may include two or more magnet fixing members arranged in a circumferential direction of the balancer housing at intervals. The magnet fixing member may extend in a circumferential direction of the balancer housing to receive two or more magnets. The magnet fixing member may include two or more magnet fixing members disposed symmetrically on the basis of a virtual line passing through a center of rotation of the drum. The balancer housing may include a first housing opened at one side thereof and a second housing to cover the first housing to define the annular channel and the magnet fixing member may be coupled to an outside of the first housing. The magnet fixing member may be coupled to a rear surface of the balancer housing opposite to a front surface of the drum. The magnet fixing member may include a first magnet support part to support one major surface of the magnet and a second magnet support part protruding from the first magnet support part to support a side surface of the magnet. The second magnet support part may have a width gradually increasing in a protruding direction of the second magnet support part. The magnet may be provided at the side surface thereof with an inclined part supported by the second magnet support part. The balancer may include a third magnet support part protruding from an inner surface of the second magnet support part to support the other major surface of the magnet opposite to one major surface of the magnet. The magnet may be provided at the side surface thereof with a stepped part supported by the third magnet support part. The magnet fixing member may be coupled to the outside of the balancer housing by welding.

The balancer may include at least one fastening protrusion protruding from the outside of the balancer housing, wherein the magnet fixing member may include at least one fastening hook coupled to the fastening protrusion. The balancer may further include at least one fastening groove formed by cutting at least a portion of the fastening protrusion, wherein the magnet fixing member may include at least one fastening rib coupled to the fastening groove. The fastening groove may be formed by cutting at least a portion of the fastening protrusion in a radial direction of the balancer housing. The fastening rib and the fastening hook may be disposed at each end of the magnet fixing member. The balancer may include a connection rib extending from one end of the magnet fixing member in a circumferential direction of the magnet fixing member to connect one end of the magnet fixing member to the fastening rib. The fastening rib and the fastening hook may extend from the connection rib in a direction in which the magnet fixing member is coupled to the balancer housing.

The balancer may include at least one fixing member fastening part protruding from the outer surface of the balancer housing in a shape corresponding to an external shape of the magnet fixing member and at least one fixing member fastening groove provided at the fixing member fastening part, wherein the magnet fixing member may include at least one fixing member fastening hook coupled to the fixing member fastening groove.

The magnet fixing member may include a first magnet support part to support one major surface of the magnet and a second magnet support part protruding from the first magnet support part to support a side surface of the magnet and the fixing member fastening hook may extend from an end of the second magnet support part in a direction in which the magnet fixing member is coupled to the balancer housing. The magnet fixing member may include a plurality of magnet fixing hooks to fix the at least one magnet received therein and the magnet fixing hooks may be arranged along the second magnet support part at intervals.

The balancer may include at least one fastening hook protruding from the outer surface of the balancer housing, wherein the magnet fixing member may include at least one fastening hole, to which the fastening hook is coupled. The magnet fixing member may include a plurality of extension parts extending from opposite ends thereof in a circumferential direction of the magnet fixing member and the fastening hole may be formed through each of the extension parts. The magnet may be inserted into a mold to form the magnet fixing member.

In accordance with another aspect of the present disclosure, a washing machine includes a cabinet, a drum rotatably disposed in the cabinet, an annular recess provided at the drum, and a balancer to offset unbalanced load generated in the drum during rotation of the drum, wherein the balancer includes a balancer housing mounted in the recess, the balancer housing having an annular channel defined therein, at least one mass movably disposed in the channel, at least one magnet to restrain the mass when rotational speed of the drum is within a predetermined range, and at least one magnet case to receive the magnet, the magnet case being coupled to an outside of the balancer housing. The magnet case may be coupled and fixed to a rear surface of the balancer housing opposite to the recess. The magnet case may include at least one magnet receiving part to receive the magnet and a plurality of magnet support parts to support the magnet received in the magnet receiving part in at least two directions. The magnet support parts may include a first magnet support part to support one major surface of the magnet and a second magnet support part protruding from the first magnet support part to support a side surface of the magnet. The second magnet support part may have an inclined inner surface. The second magnet support part may have a stepped inner surface. The magnet receiving part may include two or more magnet receiving parts arranged in a circumferential direction of the magnet case. The magnet case may be coupled to the balancer housing in a radial direction of the balancer housing. The magnet case may be coupled to the balancer housing in a direction opposite to a direction in which the balancer housing is coupled to the recess.

In accordance with a further aspect, there is provided a balancer mountable to any rotating body, not just the drum of a washing machine, the balancer comprising a balancer housing, the balancer housing having an annular channel defined therein, at least one mass movably disposed in the channel, at least one magnet configured to restrain the mass when rotational speed of the rotating body is within a predetermined range and at least one magnet case to receive the magnet, the magnet case being coupled to an outside of the balancer housing.

These and/or other aspects of the disclosure will become apparent and more readily appreciated from the following description of the embodiments, taken in conjunction with the accompanying drawings, in which:
FIG. 1 is a view showing the construction of a washing machine according to an embodiment;
FIG. 2 is an exploded perspective view showing a drum and a balancer according to an embodiment;
FIG. 3 is an enlarged view showing part A of FIG. 1;
FIG. 4 is an exploded perspective view of the balancer shown in FIG. 2;
FIG. 5 is an enlarged view showing part B of FIG. 4;
FIG. 6 is a sectional view taken along line I-I of FIG. 5;
FIG. 7 is a view illustrating a relationship among centrifugal force, magnetic force, and supporting force generated by an inclined sidewall;
FIG. 8 is a sectional view taken along line II-II of FIG. 5;
FIG. 9 is an exploded perspective view of FIG. 4 when viewed from another angle;
FIG. 10 is an enlarged view of part C of FIG. 9 showing a coupling relationship between a magnet fixing member according to an embodiment and a balancer housing;
FIG. 11 is a view showing the magnet fixing member according to the embodiment;
FIG. 12 is a view showing a state in which the magnet fixing member according to an embodiment is coupled to the balancer housing;
FIG. 13 is a sectional view taken along line III-III of FIG. 12;
FIGS. 14 to 16 are views showing a process of manufacturing the magnet fixing member according to the embodiment;
FIG. 17 is a view showing a coupling relationship between a magnet fixing member according to another embodiment and the balancer housing;
FIG. 18 is a view showing the magnet fixing member according to the embodiment;
FIG. 19 is a view showing a state in which the magnet fixing member according to the embodiment is coupled to the balancer housing;
FIG. 20 is a sectional view taken along line IV-IV of FIG. 19;
FIG. 21 is a view showing a coupling relationship between a magnet fixing member according to another embodiment and the balancer housing;
FIG. 22 is a view showing the magnet fixing member according to the embodiment;
FIG. 23 is a view showing a state in which the magnet fixing member according to the embodiment is coupled to the balancer housing;
FIG. 24 is a sectional view taken along line V-V of FIG. 23;
FIG. 25 is a view showing a coupling relationship between a magnet fixing member according to another embodiment and the balancer housing;
FIG. 26 is a view showing the magnet fixing member according to the embodiment;
FIG. 27 is a view showing a state in which the magnet fixing member according to the embodiment is coupled to the balancer housing;
FIG. 28 is a sectional view taken along line VI-VI of FIG. 27;
FIG. 29 is a view showing a coupling relationship between a magnet fixing member according to another embodiment and the balancer housing;
FIG. 30 is a view showing the magnet fixing member according to the embodiment;
FIG. 31 is a view showing a state in which the magnet fixing member according to the embodiment is coupled to the balancer housing;
FIG. 32 is a sectional view taken along line VII-VII of FIG. 31;
FIG. 33 is a view showing a magnet fixing member according to a further embodiment e;
FIG. 34 is a sectional view showing a state in which a magnet is coupled to the magnet fixing member shown in FIG. 33;
FIG. 35 is a view showing a structure in which magnets are disposed on the balancer housing; and
FIGS. 36 and 37 are views showing an operating principle of the balancer according to the embodiment.

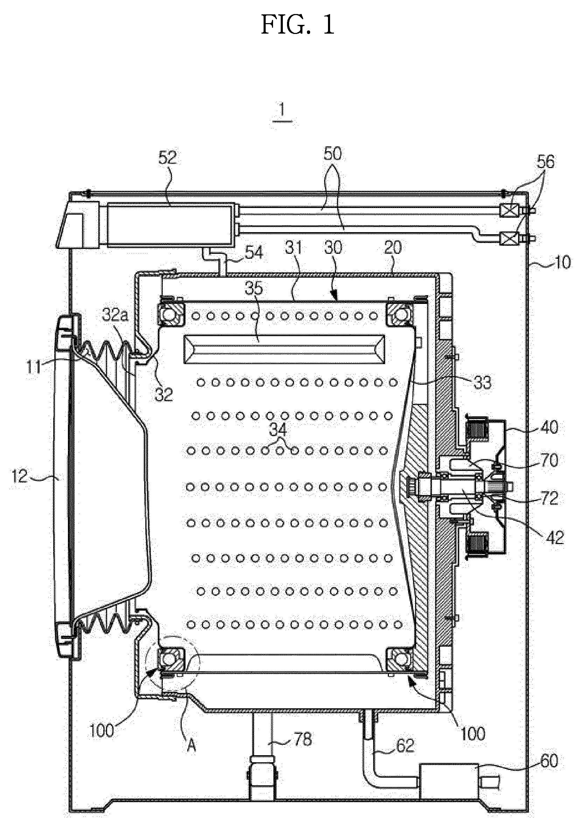

As shown in FIG. 1, a washing machine 1 includes a cabinet 10 forming the external appearance thereof, a tub 20 disposed in the cabinet 10, a drum 30 rotatably disposed in the tub 20, and a motor 40 to drive the drum 30.

An introduction port m, through which laundry is introduced into the drum 30, is formed at the front of the cabinet 10. The introduction port 11 is opened and closed by a door 12 installed at the front part of the cabinet 10.

Above the tub 20 is installed a water supply pipe 50 to supply wash water to the tub 20. One side of the water supply pipe 50 is connected to a water supply valve 56 and the other side of the water supply pipe 50 is connected to a detergent supply unit 52.

The detergent supply unit 52 is connected to the tub 20 via a connection pipe 54. Water, supplied through the water supply pipe 50, is supplied into the tub 20 together with detergent via the detergent supply unit 52. Under the tub 20 are provided a drainage pump 60 and a drainage pipe 62 to discharge water in the tub 20 from the cabinet 10.

The drum 30 includes a cylinder part 31, a front plate 32 disposed at the front of the cylinder part 31, and a rear plate 33 disposed at the rear of the cylinder part 31. An opening 32a, through which laundry is introduced and removed, is formed at the front plate 32. A drive shaft 42 to transmit power from the motor 40 to the drum 30 is connected to the rear plate 33.

The drum 30 is provided at the circumference thereof with a plurality of through holes 34, through which wash water flows. The drum 30 is provided at the inner circumference thereof with a plurality of lifters 35, by which laundry is raised and dropped when the drum 30 is rotated.

The drive shaft 42 is disposed between the drum 30 and the motor 40. One end of the drive shaft 42 is connected to the rear plate 33 of the drum 30 and the other end of the drive shaft 42 extends to the outside of the rear wall of the tub 20. When the drive shaft 42 is driven by the motor 40, the drum 30 connected to the drive shaft 42 is rotated about the drive shaft 42.

At the rear wall of the tub 20 is installed a bearing housing 70 to rotatably support the drive shaft 42. The bearing housing 70 may be made of an aluminum alloy. The bearing housing 70 may be inserted into the rear wall of the tub 20 when the tub 20 is injection molded. Between the bearing housing 70 and the drive shaft 42 are installed bearings 72 to smoothly rotate the drive shaft 42.

The tub 20 is supported by a damper 78. The damper 78 is connected between the inside bottom of the cabinet 10 and the outer surface of the tub 20.

During a washing cycle, the motor 40 rotates the drum 30 in alternating directions at low speed. As a result, laundry in the drum 30 is repeatedly raised and dropped so that contaminants are removed from the laundry.

During a spin-drying cycle, the motor 40 rotates the drum 30 in one direction at high speed. As a result, water is separated from laundry by centrifugal force applied to the laundry.

If the laundry is not uniformly distributed in the drum 30 but accumulates at one side when the drum 30 is rotated during spin-drying, rotation of the drum 30 is unstable, generating vibration and noise.

For this reason, the washing machine 1 includes a balancer 100 to stabilize rotation of the drum 30.

The balancer 100 may be mounted to the front plate 32 and/or the rear plate 33 of the drum 30. The balancer 100 mounted to the front plate 32 and the balancer 100 mounted to the rear plate 33 are the same. Hereinafter, therefore, a description will be given of the balancer 100 mounted to the front plate 32.

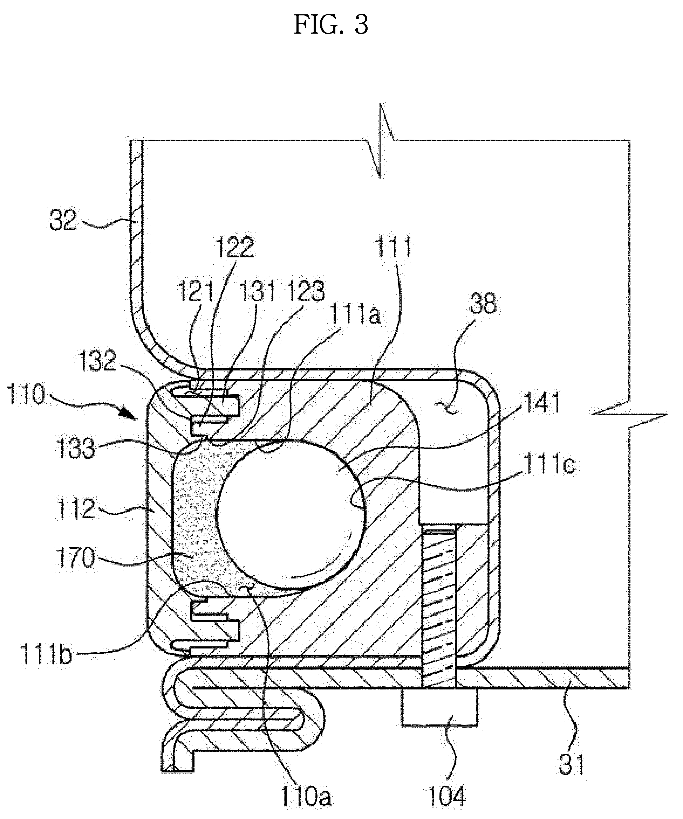

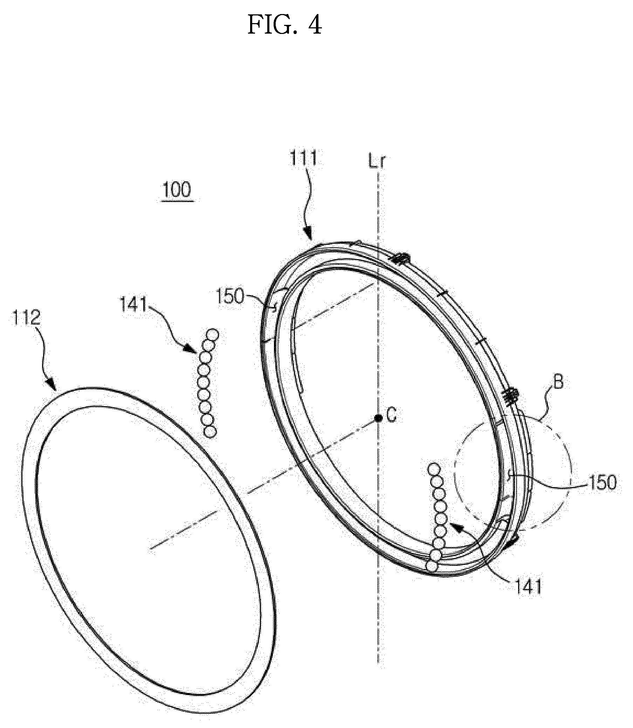

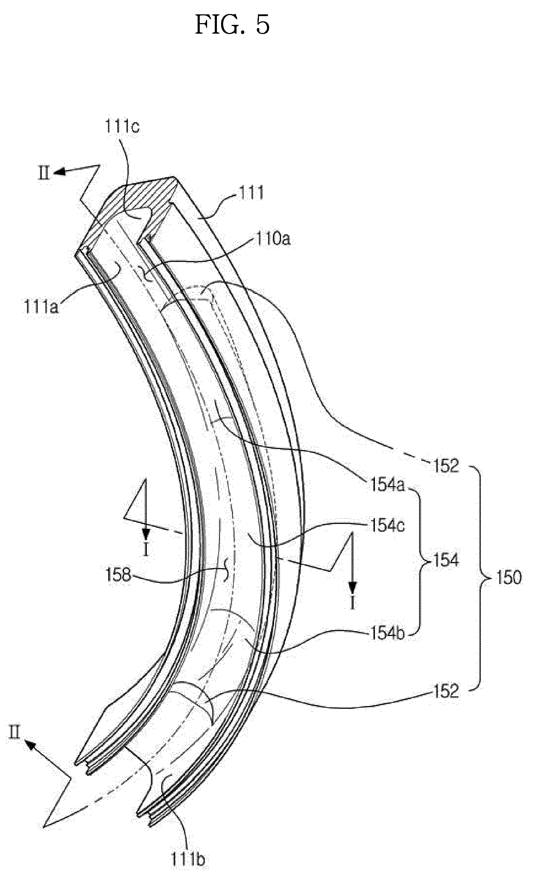

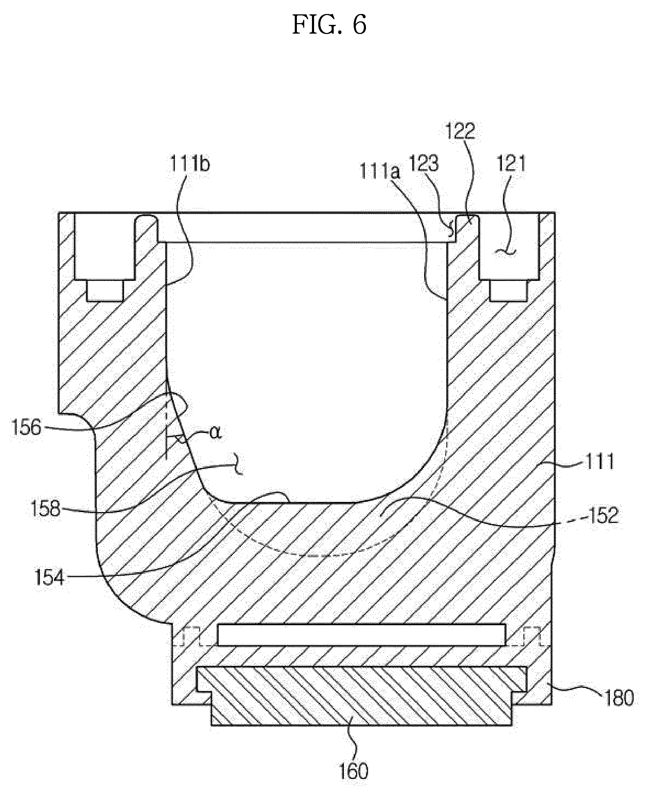

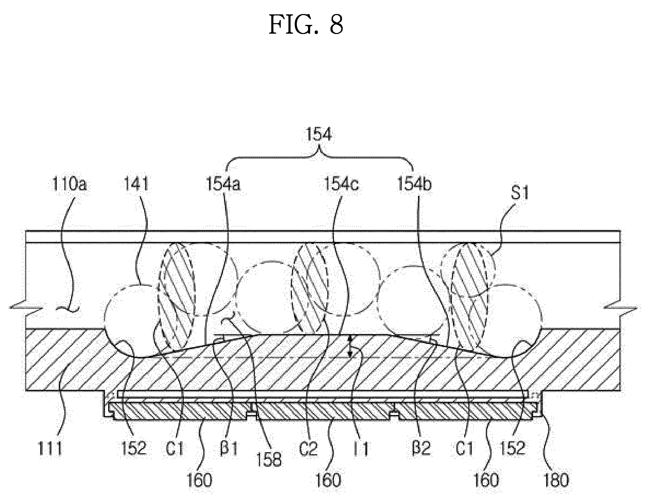

As shown in FIGS. 1 to 8, the balancer 100 includes a balancer housing 110 having an annular channel110a and a plurality of masses 141 disposed in the annular channel 110a such that the masses 141 move along the annular channel 110a to perform a balancing function of the drum 30.

An annular recess 38, which is open at the front thereof, is formed at the front plate 32 of the drum 30. The balancer housing 110 is received in the recess 38. The balancer housing 110 may be coupled to the drum 30 by fixing members 104 such that the balancer housing 110 is securely fixed to the drum 30.

The balancer housing 110 includes a first annular housing 111 opened at one side thereof and a second housing 112 to cover the opening of the first housing 111. The inner surface of the first housing 111 and the inner surface of the second housing 112 define the annular channel 110a. The first housing 111 and the second housing 112 may be manufactured by injection molding of plastic, such as polypropylene (PP) or acrylonitrile butadiene styrene (ABS). In addition, the first housing 111 and the second housing 112 may be thermally welded to each other. In the following, the front surface of the balancer housing 110 is defined as a surface exposed forward when the balancer housing 110 is coupled to the drum 30 and the rear surface of the balancer housing 110, which is opposite to the front surface of the balancer housing 110, is defined as a surface facing the front plate 32 of the drum 30 when the balancer housing 110 is coupled to the drum 30. In addition, the side surface of the balancer housing 110 is defined as a surface connected between the front surface and the rear surface of the balancer housing 110.

The first housing 111 has first coupling grooves 121 formed at opposite sides of the channel 110a and the second housing 112 has first coupling protrusions 131 coupled in the first coupling grooves 121. Second coupling protrusions 122 are formed between the first coupling grooves 121 of the first housing 111 and the channel 110a. The second coupling protrusions 122 of the first housing 111 are coupled in second coupling grooves 132 formed at the insides of the first coupling protrusions 131 of the second housing 112. Third coupling grooves 123 are formed at the insides of the second coupling protrusions 122 adjacent to the channel 110a and the second housing 112 has third coupling protrusions 133 coupled in the third coupling grooves 123. In the above coupling structure, the first housing 111 and the second housing 112 may be securely coupled to each other and, in a case in which a fluid, such as oil, is contained in the channel 110a, leakage of the fluid may be prevented.

The first housing 111 includes a first inner surface 111a and a second inner surface 111b, which are opposite to each other, and a third inner surface 111C connected between the first inner surface 111a and the second inner surface 111b.

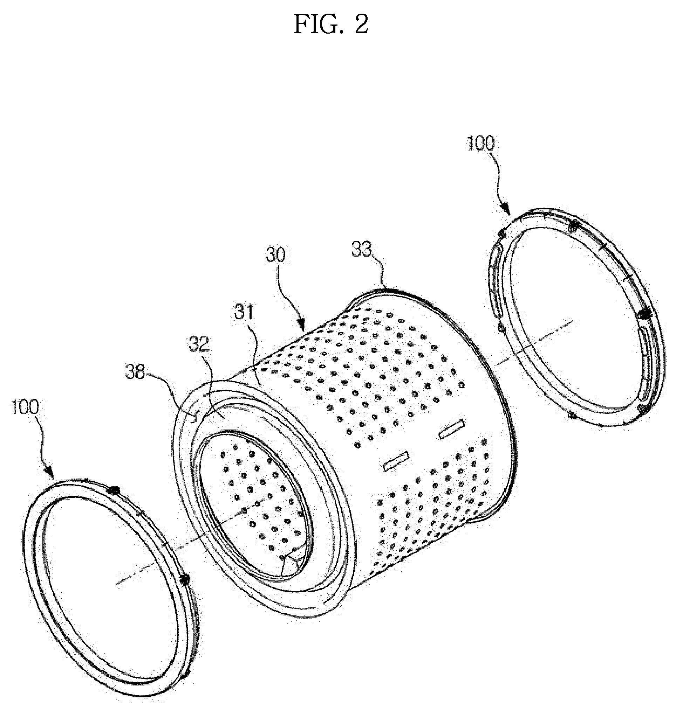

At least one selected from among the first inner surface 111a, the second inner surface 111b, and the third inner surface 111c is provided with a groove 150, in which the masses 141 are located such that the masses 141 are temporarily restrained. In FIGS. 2 to 8, the groove 150 is formed in the first inner surface 111a and the third inner surface 111c. However, embodiments of the present disclosure are not limited thereto. For example, the groove 150 may be formed in any one selected from among the first inner surface 111a, the second inner surface 111b, and the third inner surface 111c, in the first inner surface 111a and the third inner surface 111c, or in the first inner surface 111a, the second inner surface 111b, and the third inner surface 111c.

In order to prevent unbalanced load from being generated in the drum 30 due to the masses 141 in a state in which the masses 141 are located in each groove 150, grooves 150 may be disposed symmetrically on the basis of a virtual line Lr passing through a center of rotation C of the drum 30 and perpendicular to the ground.

The groove 150 extends in a circumferential direction of the balancer housing 110 to receive at least two masses 141. The groove 150 includes first support parts 152 to support the masses 141 approximately in the circumferential direction and a radial direction of the balancer housing 110, a second support part 154 provided between the first support parts 152 to support the masses 141 approximately in the radial direction of the balancer housing 110, inclined surfaces 154a and 154b inclined inwardly of the channel 110a of the balancer housing 110, and at least one flat surface 154c provided between the inclined surfaces 154a and 154b.

The first support parts 152 are provided at the opposite ends of the groove 150 in the form of a step projection to prevent the masses 141 from being separated from the groove 150 when the number of rotations of the drum 30 is within a predetermined range.

The second support part 154 protrudes inwardly of the channel 110a. The inclined surfaces 154a and 154b and the flat surface 154c are provided at the second support part 154. The inclined surfaces 154a and 154b include a first inclined surface 154a and a second inclined surface 154b disposed in a state in which the flat surface 154c is located between the first inclined surface 154a and the second inclined surface 154b. Opposite ends of the first inclined surface 154a and the second inclined surface 154b are connected to the first support parts 152 and the flat surface 154c. A first inclination angle β1 between the flat surface 154c and the first inclined surface 154a may be different from a second inclination angle β2 between the flat surface 154c and the second inclined surface 154b. A length I1 of the second support part 154 protruding inwardly of the channel may be between 1 mm and 3 mm.

The channel 110a includes a section increase portion 158 formed at a region thereof where the groove 150 is formed. The section increase portion 158 is a space defined in the channel 110a by the groove 150. The section increase portion 158 is formed in a shape corresponding to at least a portion of the mass 141. In the same manner as in the groove 150, each section increase portion 158 may extend in the circumferential direction of the balancer housing 110 to receive at least two masses 141 and section increase portions 158 may be disposed symmetrically on the basis of a virtual line Lr passing through a center of rotation C of the drum 30.

A sectional area C1 at each end of the section increase portion 158 is greater than a sectional area C2 between opposite ends of the section increase portion 158 due to the first inclined surface 154a, the second inclined surface 154b, and the flat surface 154c provided at the second support part 154.

Since the second support part 154 is formed in a shape protruding inwardly of the channel 110a, a free space is generated between the masses 141 received in the groove 150 or the section increase portion 158. When the number of rotations per minute of the drum 30 deviates from a predetermined range, therefore, the masses 141 are smoothly separated from the groove 150 without sticking to the groove 150. As a result, the masses 141 move along the channel 110a to perform a balancing function of the drum 30.

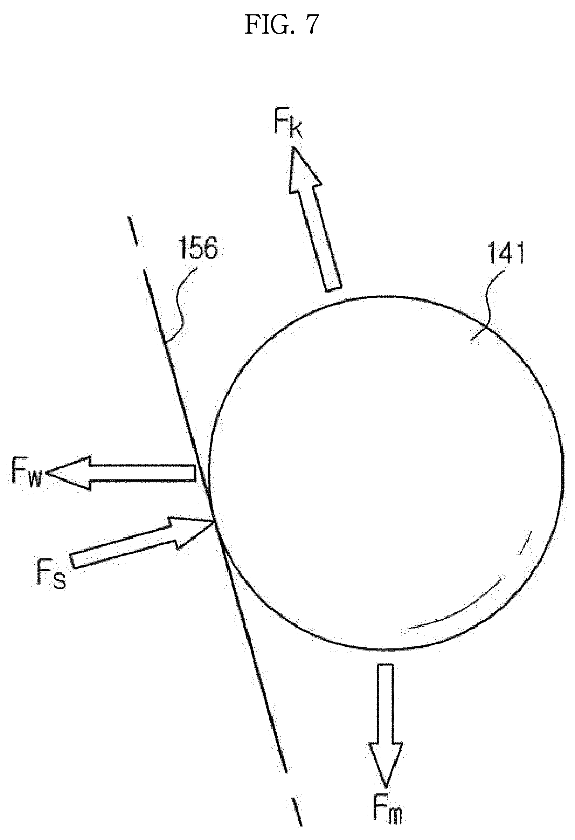

An inclined sidewall 156 is provided at the second inner surface 111b corresponding to the first inner surface 111a in which the groove 150 is formed. As shown in FIG. 7, the inclined sidewall 156 generates supporting force Fs to support the mass 141 in a direction resisting centrifugal force Fw applied to the mass 141 during rotation of the drum 30. Consequently, the centrifugal force Fw applied to the mass 141 during rotation of the drum 30 is offset by the supporting force Fs of the inclined sidewall 156 applied to the mass 141. As will hereinafter be described, therefore, magnetic force Fm generated by the magnet 160 coupled to the rear surface of the balancer housing 110 offsets only force Fk formed at the mass 141 along the inclined sidewall 156. When the number of rotations of the drum 30 is within a predetermined range, therefore, the movement of the mass 141 may be restrained. As described above, the inclined sidewall 156 is provided at the second inner surface 111b corresponding to the first inner surface 111a in which the groove 150 is formed such that the centrifugal force Fw applied to the mass 141 during rotation of the drum 30 is offset by the inclined sidewall 156. Consequently, the movement of the mass 141 is effectively restrained and controlled even using magnetic force Fm having low intensity.

The inclined sidewall 156 may have an inclination angle a of about 5 to 25 degrees. Although not shown, the inclination angle α of the inclined sidewall 156 may be changed in the inner circumferential direction of the balancer housing 110. That is, the inclination angle α of the inclined sidewall 156 may be maintained at 5 degrees in a section of the inclined sidewall 156 and the inclination angle α of the inclined sidewall 156 may be maintained at an angle greater than 5 degrees or less than 25 degrees in another section of the inclined sidewall 156. In addition, the inclination angle α of the inclined sidewall 156 may be successively increased or decreased in the inner circumferential direction of the balancer housing 110. As described above, the inclination angle α of the inclined sidewall 156 is changed in the inner circumferential direction of the balancer housing 110, thereby preventing the masses 141 received in the groove 150 from sticking to the groove 150.

Each mass 141 is formed of a metal material having a spherical shape. The masses 141 are movably disposed along the annular channel 110a in the circumferential direction of the drum 30 to offset unbalanced load in the drum 30 during rotation of the drum 30. When the drum 30 is rotated, centrifugal force is applied to the masses 141 in a direction in which the radius of the drum 30 is increased and the masses 141, separated from the groove 150, move along the channel 110a to perform a balancing function of the drum 30.

The masses 141 are received in the first housing 111 before the first housing 111 and the second housing 112 are welded to each other. The masses 141 may be disposed in the balancer housing 110 by welding the first housing 111 and the second housing 112 to each other in a state in which the masses 141 are received in the first housing 111.

A damping fluid 170 to prevent abrupt movement of the masses 141 is contained in the balancer housing 110.

The damping fluid 170 applies resistance to the masses 141 when force is applied to the masses 141 to prevent the masses 141 from abruptly moving in the channel 110a. The damping fluid 170 may be oil. The damping fluid 170 partially performs a balancing function of the drum 30 together with the masses 141 during rotation of the drum 30.

The damping fluid 170 is injected into the first housing 111 together with the masses 141 and is received in the balancer housing 110 by welding the first housing 111 and the second housing 112 to each other. However, embodiments of the present disclosure are not limited thereto. For example, the first housing 111 and the second housing 112 may be welded to each other and then the damping fluid 170 may be injected into the balancer housing 110 through an injection port (not shown) formed at the first housing 111 or the second housing 112 such that the damping fluid 170 is received in the balancer housing 110. At least one magnet 160 to restrain the masses 141 is provided at the rear surface of the balancer housing 110.

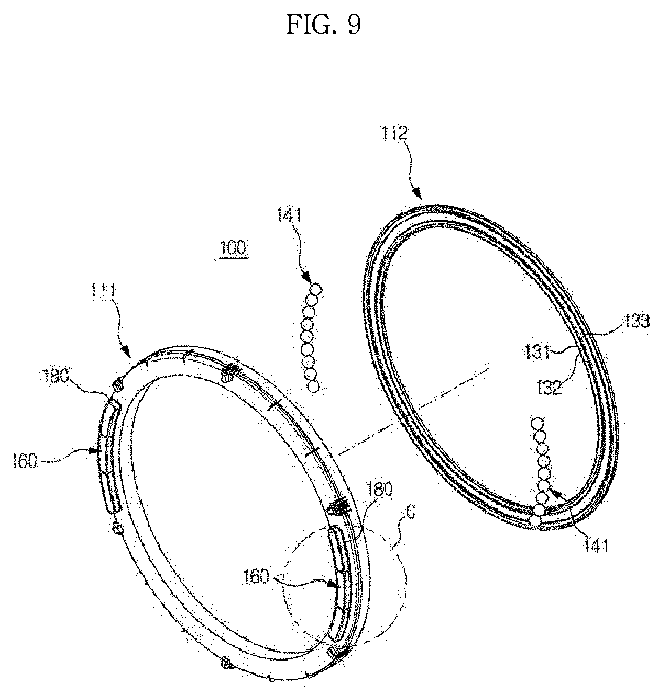

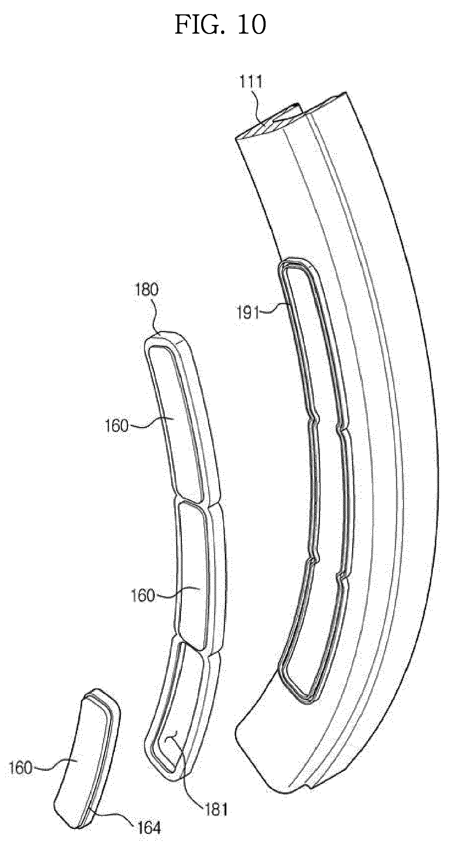

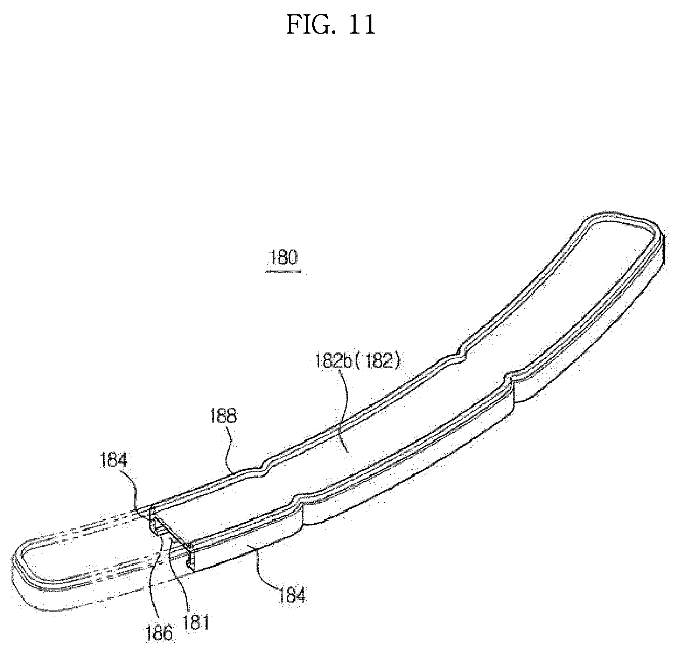

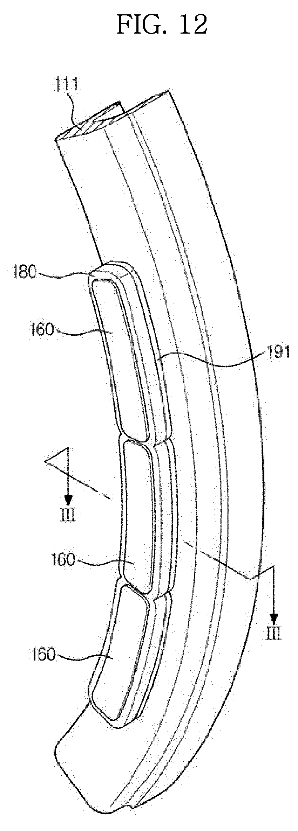

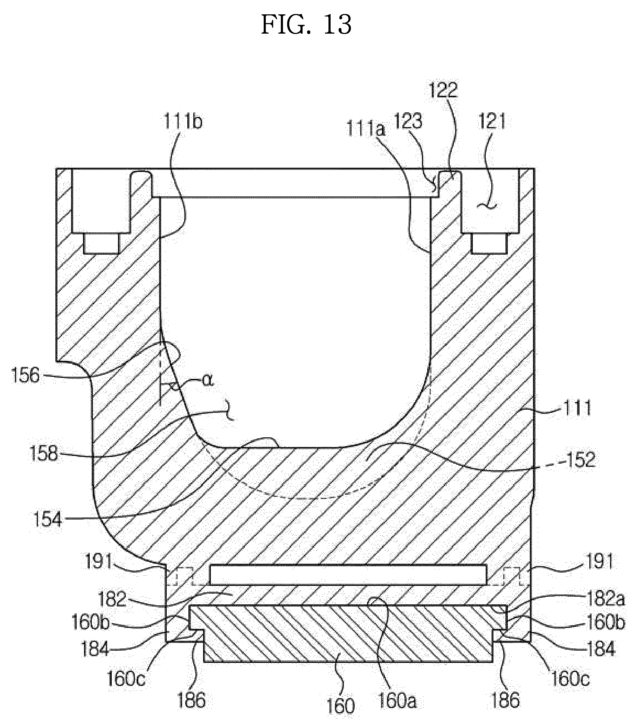

As shown in FIGS. 9 to 13, at least one magnet fixing member 180 is coupled to the outside of the balancer housing 110 corresponding to the inner surface of the balancer housing 110 at which the groove 150 is formed.

The magnet fixing member 180 is provided in the shape of a case to receive a plurality of magnets 160 and extends in the circumferential direction of the balancer housing 110.

The magnet fixing member 180 includes a plurality of magnet receiving parts 181 to receive the magnets 160 and a plurality of magnet support parts 182, 184, and 186 to support the magnets 160 received in the magnet receiving parts 181 in at least two directions.

At least two magnet receiving parts 181 are arranged in the circumferential direction of the balancer housing 110.

The magnet support parts 182, 184, and 186 include a first magnet support part 182 to support one major surface 160a of each magnet 160, a second magnet support part 184 to support a side surface 160b of each magnet 160, and a third magnet support part 186 to support the other major surface 160c of each magnet 160 opposite to one major surface 160a of each magnet 160.

The first magnet support part 182 is formed in an arc shape corresponding to the shape of the balancer housing 110. The second magnet support part 184 is formed in a shape protruding from one major surface 182a of the first magnet support part 182 and surrounding the side surface 160b of each magnet 160. The third magnet support part 186 protrudes from the inner surface of the second magnet support part 184 to support the other major surface 160c of each magnet 160 such that the magnets 160 are not separated from the magnet receiving parts 181.

The balancer housing 110 includes at least one fixing member fastening part 191 protruding from the rear surface of the first housing 111, to which the magnet fixing member 180 is coupled, in a shape corresponding to the external shape of the magnet fixing member 180. The magnet fixing member 180 includes a welding part 188 protruding from the other major surface 182b of the first magnet support part 182 opposite to one major surface 182a of the first magnet support part 182, from which the second magnet support part 184 protrudes, in a shape corresponding to the fixing member fastening part 191. In a state in which the magnets 160 are received and fixed in the magnet receiving parts 181, the magnet fixing member 180 is welded to the fixing member fastening part 191 via the welding part 188. Ultrasonic welding or thermal welding may be used as a welding method.

At least two magnet fixing members 180 may be arranged in the circumferential direction of the balancer housing 110 at intervals. For example, a pair of magnet fixing members 180 may be disposed symmetrically on the basis of a virtual line Lr passing through a center of rotation C of the drum 30.

The magnet fixing member 180 is not necessarily coupled to the rear surface of the balancer housing 110. Although not shown, the magnet fixing member 180 may be formed at the front surface of the balancer housing 110 or at the side surface of the balancer housing 110 connected between the front surface and the rear surface of the balancer housing 110.

Each magnet 160 is provided at the side surface 160b thereof with a stepped part 164, which is supported by the third magnet support part 186. The stepped part 164 is received in each magnet receiving part 181 to restrain at least one mass 141 received in the groove 150 such that the mass 141 is not separated from the groove 150.

The magnet 160 restrains the mass 141 using magnetic force. Intensity of the magnetic force generated by the magnet 160 is decided based on the number of rotations per minute of the drum 30 when the mass 141 is separated from the groove 150. For example, in order to set the number of rotations per minute of the drum 30 when the mass 141 is separated from the groove 150 to 200 rpm, intensity of the magnetic force generated by the magnet 160 may be adjusted to restrain the mass 141 such that at least one mass 141 received in the groove 150 is not separated from the groove 150 in a case in which the number of rotations per minute of the drum 30 is between 0 and 200 rpm and such that the mass 141 is separated from the groove 150 in a case in which the number of rotations per minute of the drum 30 exceeds 200 rpm. Intensity of the magnetic force generated by the magnet 160 may be adjusted to a desired value based on the size of the magnet 160, the number of the magnets 160, a material of the magnet 160, and a magnetization mode of the magnet 160.

The magnets 160 may be coupled and fixed to the magnet fixing member 180 using an insert injection method in which the magnets are inserted into a mold to manufacture the magnet fixing member 180 by injection molding during manufacture of the magnet fixing member 180.

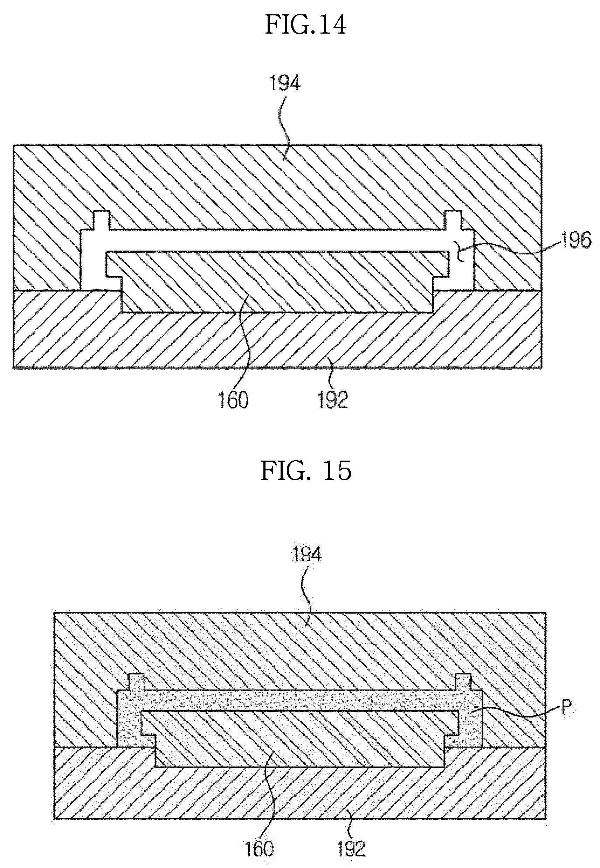

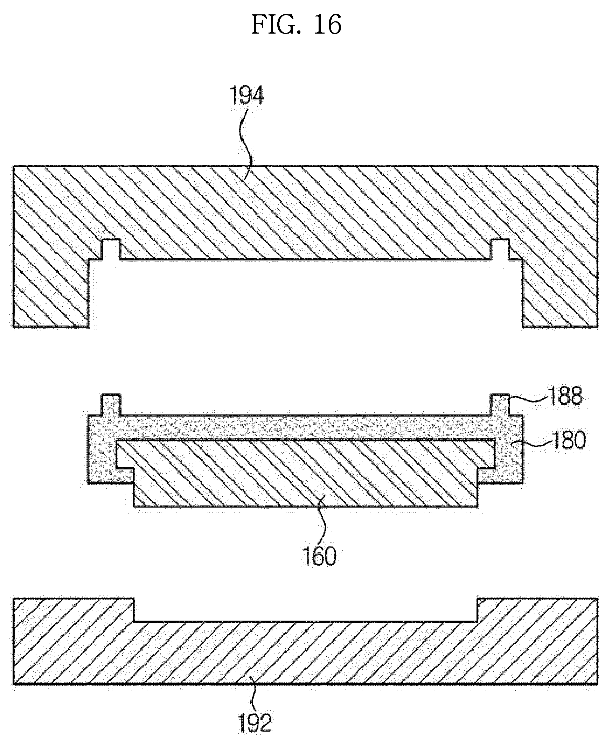

As shown in FIGS. 14 to 16, a first mold 192 and a second mold 194 to mold a magnet fixing member 180 are prepared first. A magnet 160 is inserted into the first mold 192 and then the first mold 192 and the second mold 194 are disposed in tight contact.

Subsequently, a molding resin P is supplied into a cavity 196 defined by the first mold 192 and the second mold 194 until the molding resin P fills the cavity 196. Subsequently, the molding resin is allowed to stand until fully solidified. At this time, tight contact between the first mold 192 and the second mold 194 is maintained. After the molding resin is fully solidified to form a magnet fixing member 180, the magnet fixing member 180, to which the magnet 160 is integrally coupled, is separated from the first mold 192 and the second mold 194, thereby completing manufacture of the magnet fixing member 180.

Hereinafter, modifications 280, 380, 480, 580, and 680 of the magnet fixing member 180 will be described. A description of construction identical to that of the magnet fixing member 180 will be omitted.

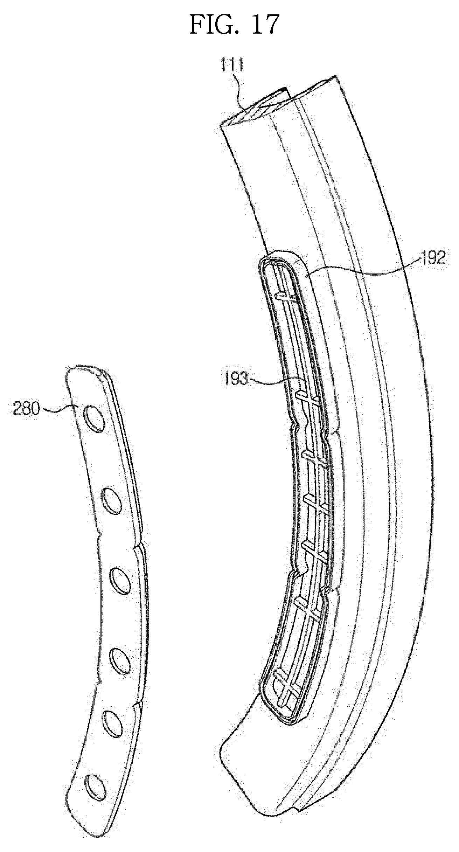

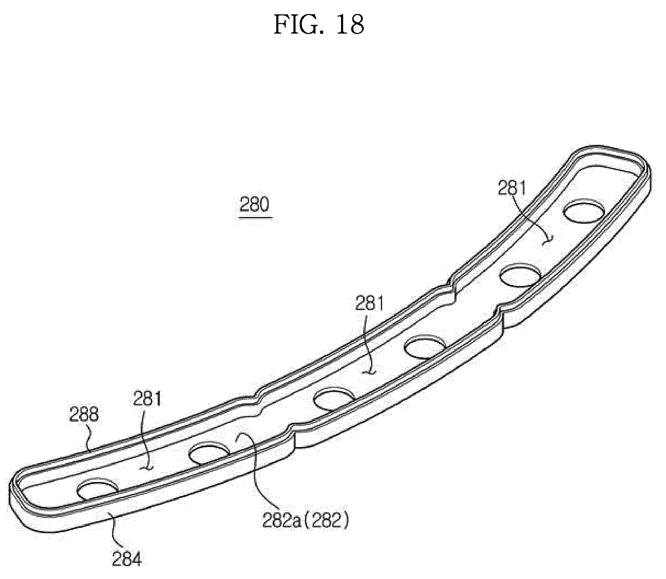

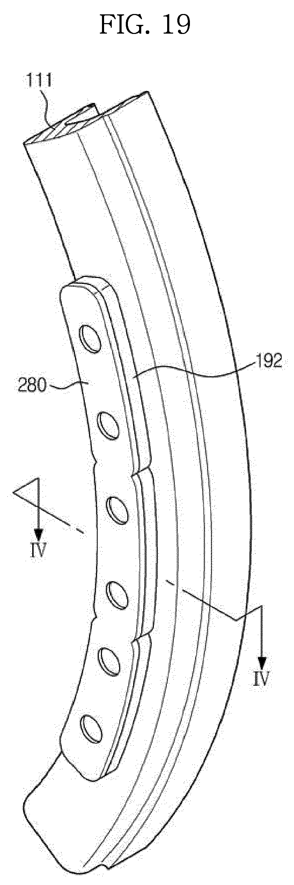

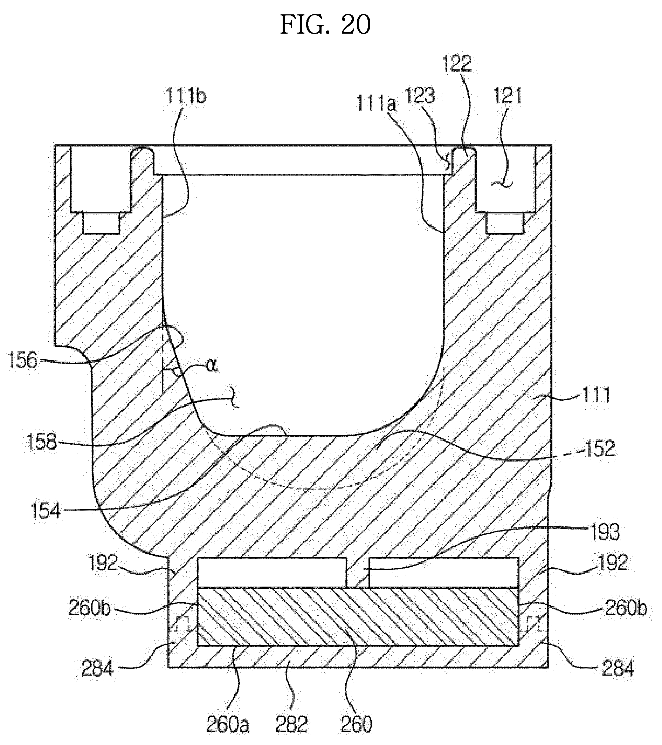

As shown in FIGS. 17 to 20, a magnet fixing member 280 includes a plurality of magnet receiving parts 281 to receive magnets 260 and a plurality of magnet support parts 282 and 284 to support the magnets 260 received in the magnet receiving parts 281 in at least two directions.

At least two magnet receiving parts 281 are arranged in the circumferential direction of the balancer housing 110.

The magnet support parts 282 and 284 include a first magnet support part 282 to support one major surface 260a of each magnet 260 and a second magnet support part 284 to support a side surface 260b of each magnet 260.

The first magnet support part 282 is formed in an arc shape corresponding to the shape of the balancer housing 110. The second magnet support part 284 is formed in a shape protruding from one major surface 282a of the first magnet support part 282 and surrounding the side surface 260b of each magnet 160.

The balancer housing 110 includes at least one fixing member fastening part 192 protruding from the rear surface of the first housing 111, to which the magnet fixing member 280 is coupled, in a shape corresponding to the external shape of the magnet fixing member 280 and at least one magnet location part 193 protruding from the rear surface of the first housing 111 and disposed in the fixing member fastening part 192.

The magnet fixing member 280 includes a welding part 288 protruding from one end of the second magnet support part 284 in a shape corresponding to the fixing member fastening part 192. In a state in which the magnets 260 are received in the magnet receiving parts 281, the magnet fixing member 280 is welded to the fixing member fastening part 192 via the welding part 288. Ultrasonic welding or thermal welding may be used as a welding method.

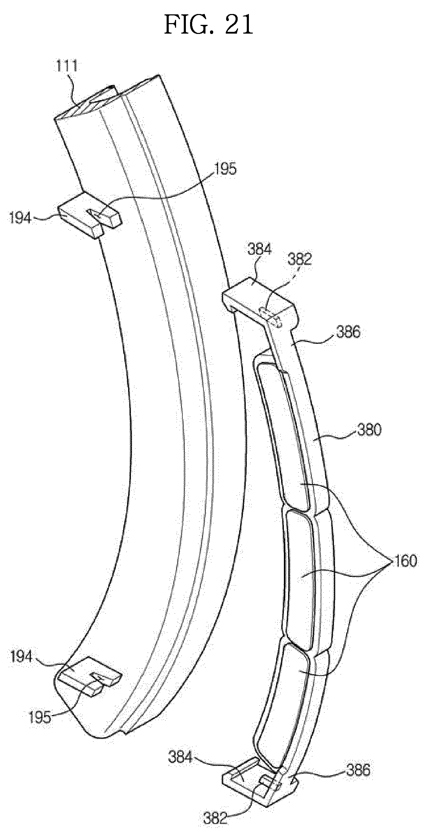

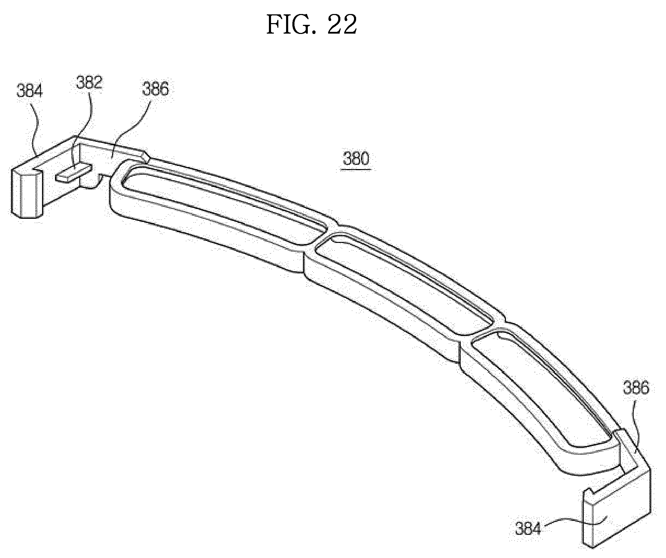

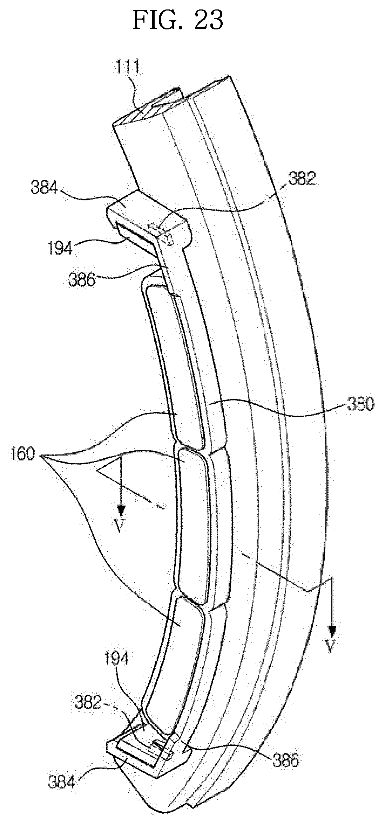

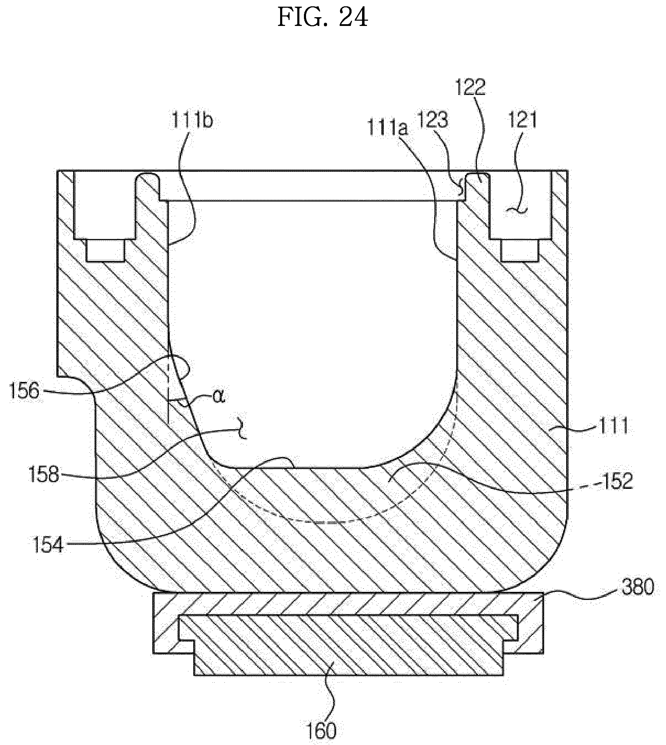

As shown in FIGS. 21 to 24, a magnet fixing member 380 is coupled to the balancer housing 110 approximately in the radial direction of the balancer housing 110.

The magnet fixing member 380 further includes fastening ribs 382, fastening hooks 384, and connection ribs 386. The connection ribs 386 extend from opposite ends of the magnet fixing member 380 in a circumferential direction of the magnet fixing member 380 and a direction opposite to the circumferential direction of the magnet fixing member 380. The fastening ribs 382 and the fastening hooks 384 extend from the connection ribs 386 in a direction in which the magnet fixing member 380 is coupled to the balancer housing 110.

The balancer housing 110 includes at least one fastening protrusion 194 protruding from the rear surface of the first housing 111 and at least one fastening groove 195 formed by cutting at least a portion of the fastening protrusion 194 in the radial direction of the balancer housing 110. The fastening groove 195 is opened at one side thereof such that a corresponding one of the fastening ribs 382 is inserted into the fastening groove 195.

A corresponding one of the fastening hooks 384 is coupled to the fastening protrusion 194 to prevent the magnet fixing member 380 from being separated from balancer housing 110 in the circumferential direction and outward in the radial direction of the balancer housing 110.

A corresponding one of the fastening ribs 382 is coupled to the fastening groove 195 to prevent the magnet fixing member 380 from being separated from balancer housing 110 in the forward-and-backward direction and inward in the radial direction of the balancer housing 110.

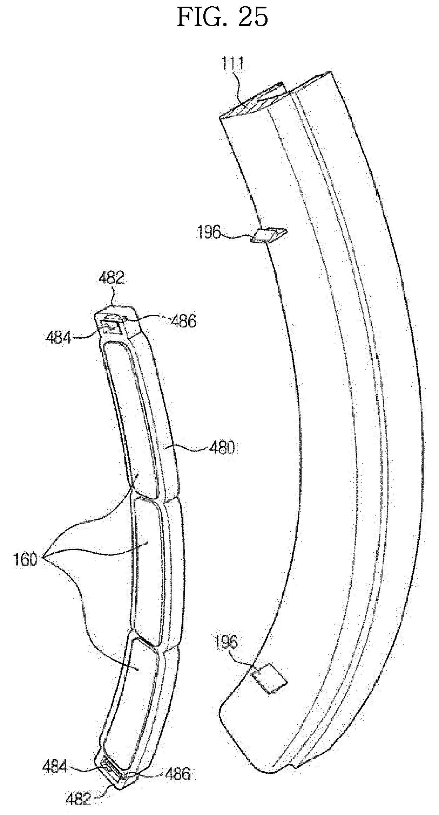

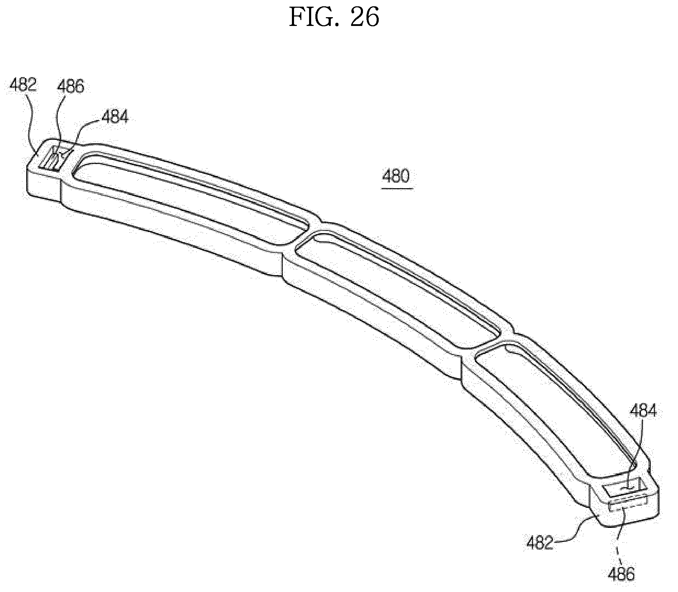

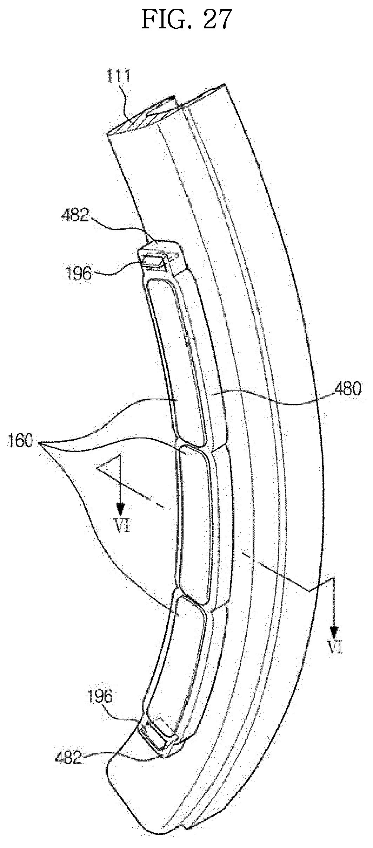

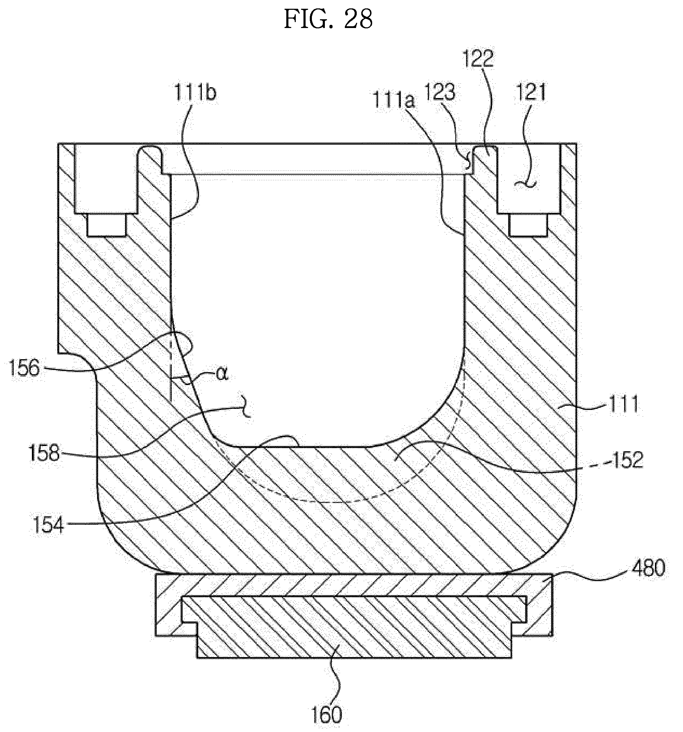

As shown in FIGS. 25 to 28, a magnet fixing member 480 is coupled to the balancer housing 110 at the rear of the balancer housing 110 in a direction opposite to the direction in which the balancer housing 110 is coupled to the recess 38.

The magnet fixing member 480 includes a plurality of extension parts 482 extending from opposite ends of the magnet fixing member 480 in a circumferential direction of the magnet fixing member 480 and a direction opposite to the circumferential direction of the magnet fixing member 380 and a plurality of fastening holes 484 formed through the extension parts 482. A support projection 486 is provided at the inside of each fastening hole 484.

The balancer housing 110 includes at least one fastening hook 196 protruding from the rear surface of the first housing 111. The fastening hook 196 is coupled to a corresponding one of the support projections 486 through a corresponding one of the fastening holes 484 to prevent the magnet fixing member 480 from being separated from the balancer housing 110.

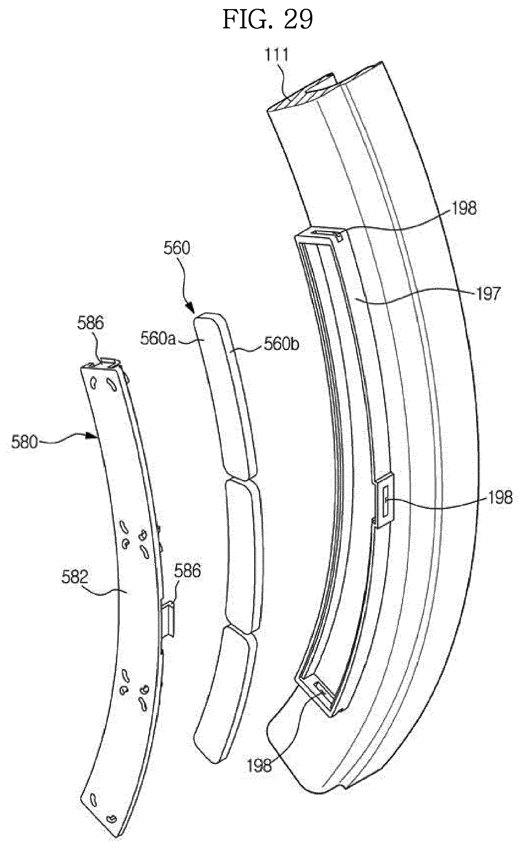

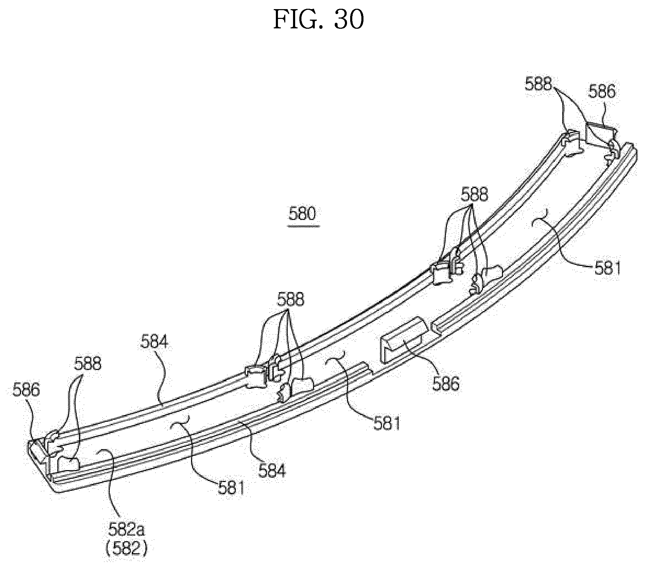

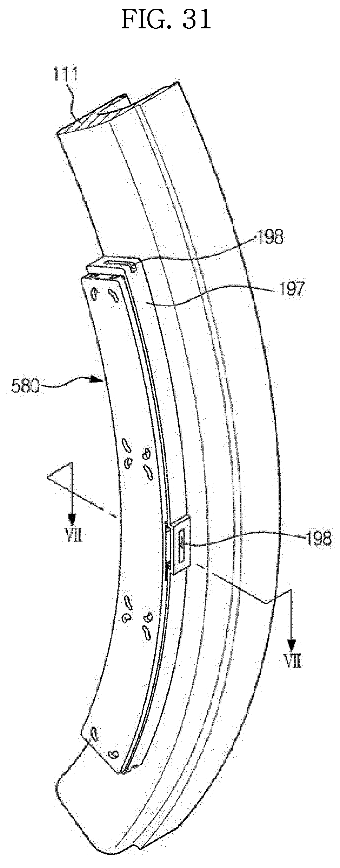

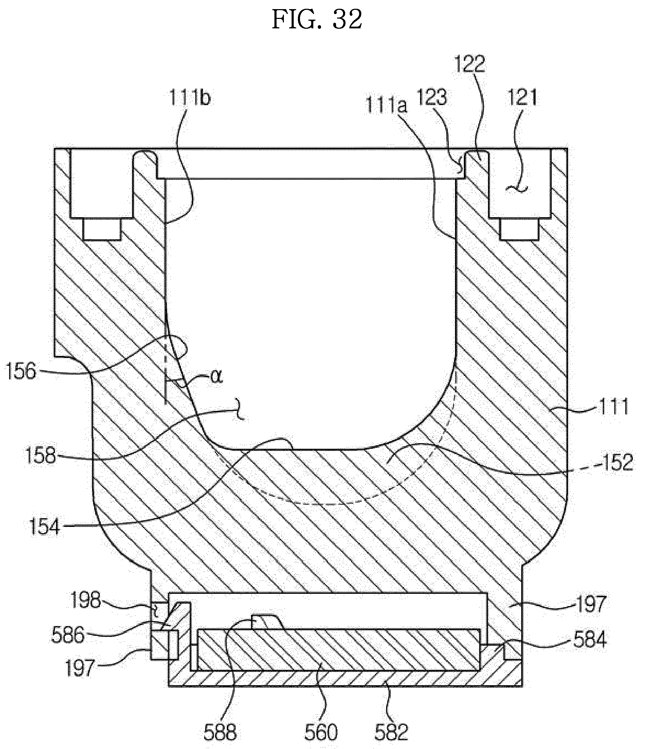

As shown in FIGS. 29 to 32, a magnet fixing member 580 is coupled to the balancer housing 110 at the rear of the balancer housing 110 in a direction opposite to the direction in which the balancer housing 110 is coupled to the recess 38.

The magnet fixing member 580 includes a plurality of magnet receiving parts 581 to receive magnets 560, a plurality of magnet support parts 582 and 584 to support the magnets 560 received in the magnet receiving parts 581 in at least two directions, a plurality of magnet fixing hooks 586 to fix the magnets 560, and a plurality of fixing member fastening hooks 588 to couple the magnet fixing member 580 to the balancer housing 110 in a state in which the magnets 560 are received in the magnet receiving parts 581.

At least two magnet receiving parts 581 are arranged in the circumferential direction of the balancer housing 110.

The magnet support parts 582 and 584 include a first magnet support part 582 to support one major surface 560a of each magnet 560 and a second magnet support part 584 to support a side surface 560b of each magnet 560.

The first magnet support part 582 is formed in an arc shape corresponding to the shape of the balancer housing 110. The second magnet support part 584 is formed in a shape protruding from one major surface 582a of the first magnet support part 582 and surrounding the side surface 560b of each magnet 560.

The magnet fixing hooks 586 are arranged along the second magnet support part 584 at intervals to uniformly fix the magnets 560 received in the magnet receiving parts 581. The fixing member fastening hooks 588 extend from the end of the second magnet support part 584 in a direction in which the magnet fixing member 580 is coupled to the balancer housing 110.

The balancer housing 110 includes at least one fixing member fastening part 197 protruding from the rear surface of the first housing 111, to which the magnet fixing member 580 is coupled, in a shape corresponding to the external shape of the magnet fixing member 580 and at least one fixing member fastening groove 198 formed at the side surface of the fixing member fastening part 197.

A corresponding one of the fixing member fastening hooks 588 is coupled to the fixing member fastening groove 198 to prevent the magnet fixing member 580 from being separated from the balancer housing 110.

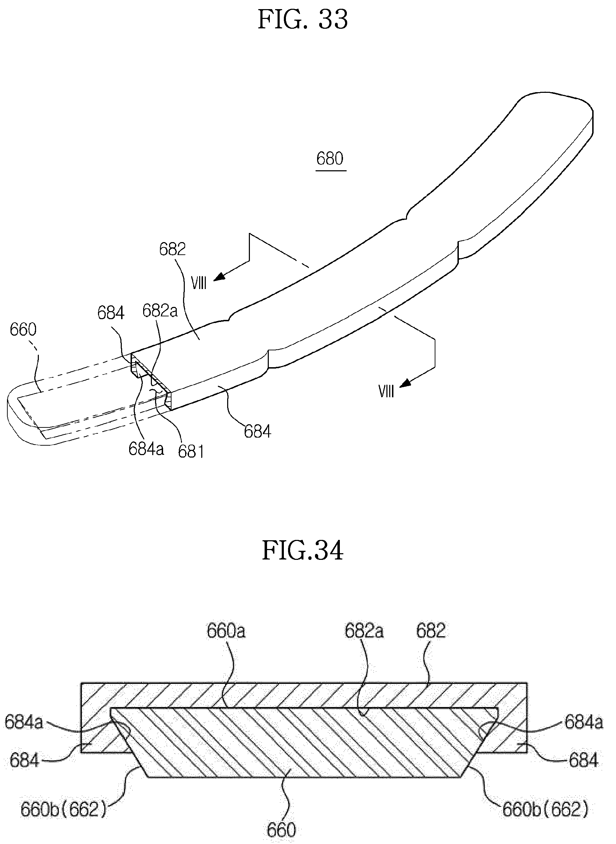

As shown in FIG. 33, a magnet fixing member 680 includes a plurality of magnet receiving parts 681 to receive magnets 660 and a plurality of magnet support parts 682 and 684 to support the magnets 660 received in the magnet receiving parts 681 in at least two directions.

The magnet support parts 682 and 684 include a first magnet support part 682 to support one major surface 66oa of each magnet 660 and a second magnet support part 684 to support a side surface 660b of each magnet 660. The first magnet support part 682 is formed in an arc shape corresponding to the shape of the balancer housing 110. The second magnet support part 684 is formed in a shape protruding from one major surface 682a of the first magnet support part 682 and surrounding the side surface 660b of each magnet 660.

In order to prevent the magnets 660 from being separated from the magnet receiving parts 681, the width of the second magnet support part 684 is gradually increased in a protruding direction of the second magnet support part 684. That is, an inner surface 684a of the second magnet support part 684 contacting the side surface 660b of each magnet 660 is inclined. Each magnet 660 is provided at the side surface 660b thereof with an inclined part 662, which is supported by the second magnet support part 684.

The magnets 660 may be inserted into a mold to manufacture the magnet fixing member 680 by injection molding during manufacture of the magnet fixing member 680.

In a manner similar to the coupling between the magnet fixing members according to the previous embodiments of the present disclosure and the balancer housing as described above, the magnet fixing member 680 may be coupled to the balancer housing 110 by ultrasonic welding, thermal welding, or hook coupling.

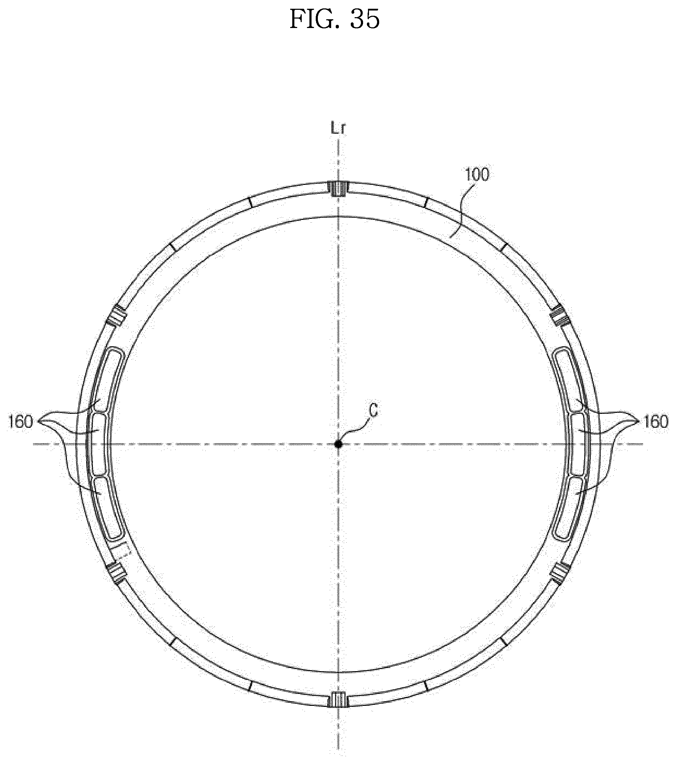

As shown in FIG. 35, a pair of magnets 160 may be disposed symmetrically on the basis of a virtual line Lr passing through a center of rotation C of the drum 30 and perpendicular to the ground at positions corresponding to the grooves 150.

It is assumed that the number of rotations per minute of the drum 30 does not exceed 200 rpm and thus the masses 141 may be restrained by the magnets 160 as described above. In a case in which the number of magnets 160 is three or more, if the masses 141 are restrained between two neighboring magnets 160, the masses 141 may not move to the remaining magnets 160. Consequently, the masses 141 may not be uniformly distributed in the balancer housing 110 with the result that unbalanced load may be generated in the drum 30.

In a case in which a pair of magnets 160 is disposed symmetrically on the basis of the virtual line Lr passing through the center of rotation C of the drum 30, if corresponding masses 141 are received in any one of the grooves, the remaining masses 141 may be naturally received in the other groove during rotation of the drum 30 and then restrained by the magnets 160. Consequently, nonuniform distribution of the masses 141 in the balancer housing 110 is prevented.

Hereinafter, a principle in which the masses 141 are restrained by the grooves 150 and the magnets 160 when the number of rotations per minute of the drum 30 is within a predetermined range and the masses 141 are separated from the grooves 150 when the number of rotations per minute of the drum 30 deviates from the predetermined range to balance the drum 30 will be described.

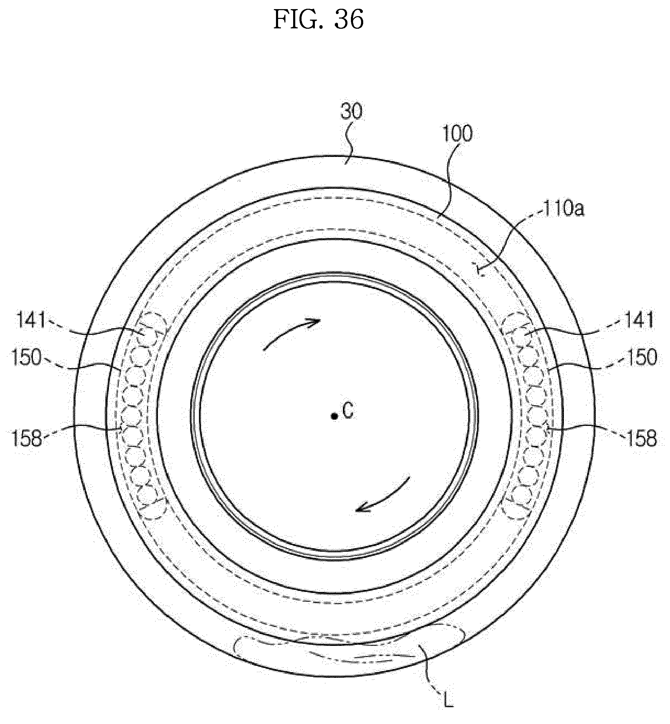

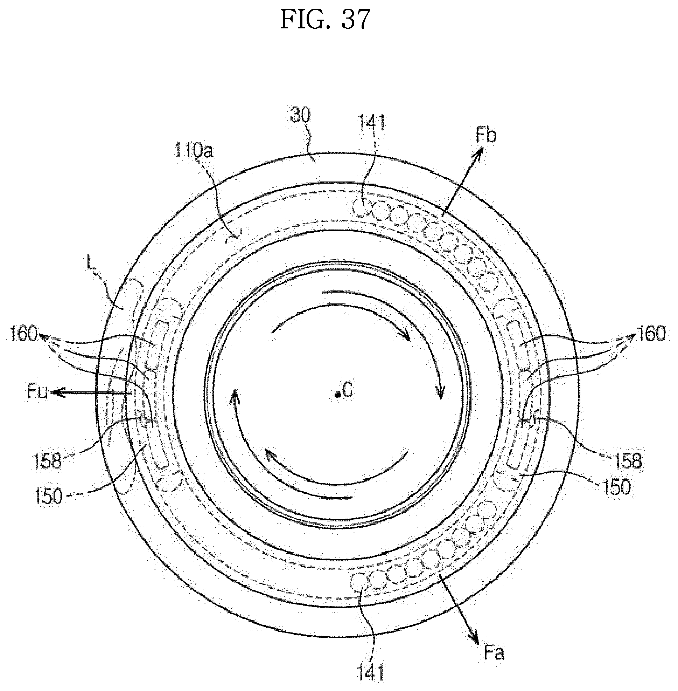

FIGS. 36 and 37 are views showing an operating principle of the balancer according to the embodiment of the present disclosure. A damping fluid 170 is omitted from FIGS. 36 and 37.

As shown in FIG. 36, when the number of rotations per minute of the drum 30 is within a predetermined range at the beginning of spin-drying of laundry, the masses 141 are received in the grooves 150 or the section increase portions 158 and movement of the masses 141 is restrained by the magnets 160.

Before spin-drying is commenced, i.e. before the drum 30 is rotated, the masses 141 are disposed at the lower part of the balancer housing 110 due to gravity. When the drum 30 is rotated to spin-dry the laundry in this state, centrifugal force is applied to the masses 141. As a result, the masses 141 move along the channel 110a of the balancer housing 110. During movement of the masses 141 along the channel 110a of the balancer housing 110, the masses 141 are received and located in the grooves 150. The movement of the masses 141 received and located in the grooves 150 is restrained by magnetic force generated by the magnets 160 before the number of rotations per minute of the drum 30 deviates from a predetermined range. For example, in a case in which the washing machine is designed such that when the number of rotations per minute of the drum 30 is 200 rpm, centrifugal force applied to the masses 141 by rotation of the drum 30, force generated by the masses 141 due to gravity, magnetic force generated by the magnets 160, and force generated by the grooves 150 to support the masses 141 are balanced, the movement of the masses 141 is restrained in a state in which the masses 141 are received and located in the grooves 150 when the number of rotations per minute of the drum 30 is between 0 and 200 rpm at the beginning of spin-drying of laundry. As described above, the movement of the masses 141 is restrained when the drum 30 is rotated at relatively low speed at the beginning of spin-drying of laundry to prevent the masses 141 from generating vibration of the drum 30 together with laundry L or to prevent the increase of vibration generated by the laundry L. In addition, noise due to vibration of the drum 30 may be reduced.

When the number of rotations per minute of the drum 30 deviates from the predetermined range, as shown in FIG. 37, the masses 141 received and restrained in the grooves 150 or the section increase portions 158 are separated from the grooves 150 or the section increase portions 158 and move along the channel 110a of the balancer housing 110 to perform a balancing function of the drum 30.

For example, in a case in which the washing machine is designed such that when the number of rotations per minute of the drum 30 is 200 rpm, centrifugal force applied to the masses 141 by rotation of the drum 30, force generated by the masses 141 due to gravity, magnetic force generated by the magnets 160, and force generated by the grooves 150 to support the masses 141 are balanced, the centrifugal force applied to the masses 141 is increased when the number of rotations per minute of the drum 30 exceeds 200 rpm. As a result, the masses 141 are separated from the grooves 150 or the section increase portions 158 and move along the channel 110a of the balancer housing 110. At this time, the masses 141 are controlled to slide and roll in a direction to offset unbalanced load Fu generated in the drum 30 due to one-side accumulation of the laundry L, i.e. a direction opposite to the direction in which the unbalanced load Fu is applied to the drum 30. Consequently, forces Fa and Fb to offset the unbalanced load Fu are generated to stabilize rotation of the drum 30.

As is apparent from the above description, the balancer effectively offsets unbalanced load applied to the drum, thereby stabilizing rotation of the drum.

In addition, vibration and noise are prevented from being generated from the drum due to the masses provided to balance the drum before the drum reaches predetermined rotational speed.

Although a few embodiments of the present invention have been shown and described, it would be appreciated by those skilled in the art that changes may be made in these embodiments without departing from the principles of the invention, the scope of which is defined in the claims. For example, the principles of the invention are applicable to any washing machine having a drum, including washing machines that do not have a tub.

## Claims

1. A washing machine having a drum (30) and a balancer (100) mounted to the drum to offset unbalanced load generated in the drum during rotation of the drum, the balancer comprising:
a balancer housing (110) coupled to the drum, the balancer housing having an annular channel (110a) defined therein;
at least one mass (141) movably disposed in the channel;
at least one magnet (160, 260, 560, 660) to restrain movement of the mass along the channel when rotational speed of the drum is within a predetermined range; and
at least one magnet fixing member (180, 280, 380, 480, 580, 680) to receive and fix the magnet;
a fixing member fastening part (191, 192, 194, 196, 197) protruding from an outer rear surface of the balancer housing opposite to a front plate (32) of the drum to which the magnet fixing member is coupled;
**characterised by** the magnet fixing member having a coupling part (188, 288, 382, 384, 482, 484, 486, 588) which has a complementary shape to the fixing member fastening part, to couple the magnet fixing member to the balancer housing.

2. The washing machine according to claim 1, wherein the magnet fixing member comprises a plurality of magnet fixing members (180, 280, 380, 480, 580, 680) arranged in a circumferential direction of the balancer housing at intervals;
and/or wherein the magnet fixing member extends in a circumferential direction of the balancer housing to receive two or more magnets (160, 260, 560, 660).

3. The washing machine according to claim 1, wherein the magnet fixing member comprises a plurality of magnet fixing members (180, 280, 380, 480, 580, 680) disposed symmetrically on the basis of a virtual line passing through a center of rotation of the drum (30).

4. The washing machine according to any one of the preceding claims, wherein the balancer housing comprises:
a first housing (111) opened at one side thereof; and
a second housing (112) to cover the first housing to define the annular channel, and
the magnet fixing member is coupled to an outside of the first housing.

5. The washing machine according to any one of the preceding claims, wherein the magnet fixing member is coupled to a rear surface of the balancer housing (110) opposite to a front surface of the drum.

6. The washing machine according to any one of the preceding claims, wherein the magnet fixing member comprises:
a first magnet support part (182, 282, 582, 682) to support one major surface (160a, 260a, 560a, 660a) of the magnet; and
a second magnet support part (184, 284, 584, 684) protruding from the first magnet support part to support a side surface (160b, 260b, 560b, 660b) of the magnet.

7. The washing machine according to claim 6, wherein the second magnet support part (684) has a width gradually increasing in a protruding direction of the second magnet support part;
and/or wherein the magnet is provided at the side surface thereof with an inclined part (662) supported by the second magnet support part;
and/or further comprising a third magnet support part (186) protruding from an inner surface of the second magnet support part to support the other major surface of the magnet (160c) opposite to one major surface of the magnet,
wherein the magnet may be provided at the side surface thereof with a stepped part (164) supported by the third magnet support part.

8. The washing machine according to any one of the preceding claims, wherein:
the fixing member fastening part comprises at least one fastening protrusion (194) protruding from the outside of the balancer housing; and
the magnet fixing member coupling part comprises at least one fastening hook (384) coupled to the fastening protrusion.

9. The washing machine according to claim 8, further comprising at least one fastening groove (195) formed by cutting at least a portion of the fastening protrusion,
wherein the magnet fixing member coupling part comprises at least one fastening rib (382) coupled to the fastening groove.

10. The washing machine according to claim 9, wherein the fastening rib (382) and the fastening hook (384) are disposed at each end of the magnet fixing member.

11. The washing machine according to claim 10, further comprising a connection rib (386) extending from one end of the magnet fixing member in a circumferential direction of the magnet fixing member to connect one end of the magnet fixing member to the fastening rib,
wherein the fastening rib and the fastening hook may extend from the connection rib in a direction in which the magnet fixing member is coupled to the balancer housing.

12. The washing machine according to claim 1, wherein:
the fixing member fastening part (197) is formed in a shape corresponding to an external shape of the magnet fixing member (580); and
at least one fixing member fastening groove (198) provided at the fixing member fastening part,
wherein the magnet fixing member coupling part comprises at least one fixing member fastening hook (588) coupled to the fixing member fastening groove.

13. The washing machine according to claim 12, wherein the magnet fixing member (580) comprises a first magnet support part (582) to support one major surface (560a) of the magnet (560) and a second magnet support part (584) protruding from the first magnet support part to support a side surface (560b) of the magnet, and
the fixing member fastening hook (588) extends from an end of the second magnet support part in a direction in which the magnet fixing member is coupled to the balancer housing;
and/or wherein the magnet fixing member comprises a plurality of magnet fixing hooks (586) to fix the at least one magnet received therein, and
the magnet fixing hooks are arranged along the second magnet support part at intervals.

14. The washing machine according to claim 1, wherein:
the fixing member fastening part comprises at least one fastening hook (196) protruding from an outer surface of the balancer housing,
wherein the magnet fixing member coupling part comprises at least one fastening hole (484), to which the fastening hook is coupled, wherein the magnet fixing member may comprise a plurality of extension parts (482) extending from opposite ends thereof in a circumferential direction of the magnet fixing member, and
the fastening hole is formed through each of the extension parts.

15. The washing machine according to any one of the preceding claims, wherein the magnet fixing member (180) comprises a magnet case to receive the magnet.

## Patentansprüche

1. Waschmaschine mit einer Trommel (30) und einer Ausgleichsvorrichtung (100), die an der Trommel angebracht ist, um während der Drehung der Trommel in der Trommel erzeugte Unwucht auszugleichen, wobei die Ausgleichsvorrichtung Folgendes umfasst:
ein Ausgleichsvorrichtungsgehäuse (110), das an die Trommel gekoppelt ist, wobei das Ausgleichsvorrichtungsgehäuse einen darin definierten ringförmigen Kanal (110a) aufweist;
mindestens eine Masse (141), die beweglich in dem Kanal angeordnet ist;
mindestens einen Magneten (160, 260, 560, 660) zum Aufhalten der Bewegung der Masse entlang dem Kanal, wenn die Drehzahl der Trommel innerhalb von einem vorausbestimmten Bereich liegt; und
mindestens ein Magnetfixierungselement (180, 280, 380, 480, 580, 680) zum Aufnehmen und Fixieren des Magneten;
einen Fixierungselement-Befestigungsteil (191, 192, 194, 196, 197), der von einer hinteren Außenfläche des Ausgleichsvorrichtungsgehäuses gegenüber von einer Frontplatte (32) der Trommel, an die das Magnetfixierungselement gekoppelt ist, vorsteht;
**dadurch gekennzeichnet, dass**,
das Magnetfixierungselement einen Kopplungsteil (188, 288, 382, 384, 482, 484, 486, 588) aufweist, der eine zu dem Fixierungselement-Befestigungsteil komplementäre Form aufweist, um das Magnetfixierungselement an das Ausgleichsvorrichtungsgehäuse zu koppeln.

2. Waschmaschine nach Anspruch 1, wobei das Magnetfixierungselement eine Vielzahl von Magnetfixierungselementen (180, 280, 380, 480, 580, 680) umfasst, die in einer Umfangsrichtung des Ausgleichsvorrichtungsgehäuses in Abständen angeordnet sind;
und/oder wobei sich das Magnetfixierungselement in einer Umfangsrichtung des Ausgleichsvorrichtungsgehäuses erstreckt, um zwei oder mehr Magneten (160, 260, 560, 660) aufzunehmen.

3. Waschmaschine nach Anspruch 1, wobei das Magnetfixierungselement eine Vielzahl von Magnetfixierungselementen (180, 280, 380, 480, 580, 680) umfasst, die in Bezug auf eine durch einen Drehungsmittelpunkt der Trommel (30) verlaufende virtuelle Linie symmetrisch angeordnet sind.

4. Waschmaschine nach einem der vorangehenden Ansprühe, wobei das Ausgleichsvorrichtungsgehäuse Folgendes umfasst:
ein erstes Gehäuse (111), das an einer Seite davon geöffnet ist; und
ein zweites Gehäuse (112) zum Abdecken des ersten Gehäuses, um den ringförmigen Kanal zu definieren, und
wobei das Magnetfixierungselement an eine Außenseite des ersten Gehäuses gekoppelt ist.

5. Waschmaschine nach einem der vorangehenden Ansprüche, wobei das Magnetfixierungselement gegenüber von einer vorderen Fläche der Trommel an eine hintere Fläche des Ausgleichsvorrichtungsgehäuses (110) gekoppelt ist.

6. Waschmaschine nach einem der vorangehenden Ansprüche, wobei das Magnetfixierungselement Folgendes umfasst:
einen ersten Magnethalteteil (182, 282, 582, 682) zum Halten einer Hauptfläche (160a, 260a, 560a, 660a) des Magneten; und
einen zweiten Magnethalteteil (184, 284, 584, 684), der von dem ersten Magnethalteteil vorsteht, um eine Seitenfläche (160b, 260b, 560b, 660b) des Magneten zu halten.

7. Waschmaschine nach Anspruch 6, wobei der zweite Magnethalteteil (684) eine in einer Vorstandsrichtung des zweiten Magnethalteteils allmählich zunehmende Breite aufweist;
und/oder wobei der Magnet an der Seitenfläche davon vorgesehen ist, wobei ein schräger Teil (662) von dem zweiten Magnethalteteil gehalten wird;
und/oder weiter umfassend einen dritten Magnethalteteil (186), der von einer Innenfläche des zweiten Magnethalteteils vorsteht, um die andere Hauptfläche des Magneten (160c) gegenüber von einer Hauptfläche des Magneten zu halten,
wobei der Magnet an der Seitenfläche davon mit einem abgestuften Teil (164) versehen sein kann, der von dem dritten Magnethalteteil gehalten wird.

8. Waschmaschine nach einem der vorangehenden Ansprüche, wobei:
der Fixierungselement-Befestigungsteil mindestens einen Befestigungsvorsprung (194) umfasst, der von der Außenseite des Ausgleichsvorrichtungsgehäuses vorsteht; und
der Magnetfixierungselement-Kopplungsteil mindestens einen Befestigungshaken (384) umfasst, der an den Befestigungsvorsprung gekoppelt ist.

9. Waschmaschine nach Anspruch 8, weiter umfassend mindestens eine Befestigungsnut (195), die gebildet wird, indem mindestens ein Abschnitt des Befestigungsvorsprungs geschnitten wird,
wobei der Magnetfixierungselement-Kopplungsteil mindestens eine Befestigungsrippe (382) umfasst, die an die Befestigungsnut gekoppelt ist.

10. Waschmaschine nach Anspruch 9, wobei die Befestigungsrippe (382) und der Befestigungshaken (384) an jedem Ende des Magnetfixierungselements angeordnet sind.

11. Waschmaschine nach Anspruch 10, weiter umfassend eine Verbindungsrippe (386), die sich von einem Ende des Magnetfixierungselements in einer Umfangsrichtung des Magnetfixierungselements erstreckt, um ein Ende des Magnetfixierungselements mit der Befestigungsrippe zu verbinden,
wobei die Befestigungsrippe und der Befestigungshaken sich von der Verbindungsrippe in einer Richtung erstrecken können, in der das Magnetfixierungselement an das Ausgleichsvorrichtungsgehäuse gekoppelt ist.

12. Waschmaschine nach Anspruch 1, wobei:
der Fixierungselement-Befestigungsteil (197) in einer einer äußeren Form des Magnetfixierungselements (580) entsprechenden Form gebildet ist; und
mindestens eine Fixierungselement-Befestigungsnut (198) an dem Fixierungselement-Befestigungsteil vorgesehen ist,
wobei der Magnetfixierungselement-Kopplungsteil mindestens einen Fixierungselement-Befestigungshaken (588) umfasst, der an die Fixierungselement-Befestigungsnut gekoppelt ist.

13. Waschmaschine nach Anspruch 12, wobei das Magnetfixierungselement (580) einen ersten Magnethalteteil (582) zum Halten einer Hauptfläche (560a) des Magneten (560) und einen zweiten Magnethalteteil (584), der von dem ersten Magnethalteteil vorsteht, um eine Seitenfläche (560b) des Magneten zu halten, umfasst, und
sich der Fixierungselement-Befestigungshaken (588) von einem Ende des zweiten Magnethalteteils in einer Richtung erstreckt, in der das Magnetfixierungselement an das Ausgleichsvorrichtungsgehäuse gekoppelt ist;
und/oder wobei das Magnetfixierungselement eine Vielzahl von Magnetfixierungshaken (586) umfasst, um den mindestens einen darin aufgenommenen Magneten zu fixieren, und
die Magnetfixierungshakten in Abständen entlang dem zweiten Magnethalteteil angeordnet sind.

14. Waschmaschine nach Anspruch 1, wobei:
das Fixierungselement-Befestigungsteil mindestens einen Befestigungshaken (196) umfasst, der von einer Außenfläche des Ausgleichsvorrichtungsgehäuses vorsteht,
wobei das Magnetfixierungselement-Kopplungsteil mindestens ein Befestigungsloch (484) umfasst, an das der Befestigungshaken gekoppelt ist, wobei das Magnetfixierungselement eine Vielzahl von Verlängerungsteilen (482) umfassen kann, die sich von gegenüberliegenden Enden davon in einer Umfangsrichtung des Magnetfixierungselements erstrecken, und
das Befestigungsloch durch jeden der Verlängerungsteile hindurch gebildet ist.

15. Waschmaschine nach einem der vorangehenden Ansprüche, wobei das Magnetfixierungselement (180) eine Magnethülle zum Aufnehmen des Magneten umfasst.

## Revendications

1. Machine à laver ayant un tambour (30) et un compensateur d'équilibrage (100) monté sur le tambour à des fins d'équilibrage d'une charge déséquilibrée produite dans le tambour lors de la rotation du tambour, le compensateur d'équilibrage comportant :
un logement de compensateur d'équilibrage (110) accouplé au tambour, le logement de compensateur d'équilibrage ayant un canal annulaire (110a) défini dans celui-ci ;
au moins une masse (141) disposée de manière mobile dans le canal ;
au moins un aimant (160, 260, 560, 660) servant à restreindre le mouvement de la masse le long du canal quand la vitesse de rotation du tambour se trouve dans les limites d'une plage prédéterminée ; et
au moins un élément de fixation d'aimant (180, 280, 380, 480, 580, 680) servant à recevoir et à fixer l'aimant ;
une partie d'attache d'élément de fixation (191, 192, 194, 196, 197) faisant saillie depuis une surface arrière extérieure du logement de compensateur d'équilibrage à l'opposé d'une plaque avant (32) du tambour à laquelle l'élément de fixation d'aimant est accouplé ;
**caractérisé par** l'élément de fixation d'aimant ayant une partie d'accouplement (188, 288, 382, 384, 482, 484, 486, 588) qui a une forme complémentaire par rapport à la partie d'attache d'élément de fixation, à des fins d'accouplement de l'élément de fixation d'aimant au logement de compensateur d'équilibrage.

2. Machine à laver selon la revendication 1, dans laquelle l'élément de fixation d'aimant comporte une pluralité d'éléments de fixation d'aimant (180, 280, 380, 480, 580, 680) agencés dans une direction allant dans le sens de la circonférence du logement de compensateur d'équilibrage selon des intervalles ;
et/ou dans laquelle l'élément de fixation d'aimant s'étend dans une direction allant dans le sens de la circonférence du logement de compensateur d'équilibrage pour recevoir deux ou plusieurs aimants (160, 260, 560, 660).

3. Machine à laver selon la revendication 1, dans laquelle l'élément de fixation d'aimant comporte une pluralité d'éléments de fixation d'aimant (180, 280, 380, 480, 580, 680) disposés de manière symétrique en fonction d'une ligne virtuelle passant par un centre de rotation du tambour (30).

4. Machine à laver selon l'une quelconque des revendications précédentes, dans laquelle le logement de compensateur d'équilibrage comporte :
un premier logement (111) ouvert au niveau d'un côté de celui-ci ; et
un deuxième logement (112) servant à recouvrir le premier logement pour définir le canal annulaire, et
l'élément de fixation d'aimant est accouplé à une partie extérieure du premier logement.

5. Machine à laver selon l'une quelconque des revendications précédentes, dans laquelle l'élément de fixation d'aimant est accouplé à une surface arrière du logement de compensateur d'équilibrage (110) à l'opposé d'une surface avant du tambour.

6. Machine à laver selon l'une quelconque des revendications précédentes, dans laquelle l'élément de fixation d'aimant comporte :
une première partie de support d'aimant (182, 282, 582, 682) servant à supporter une surface majeure (160a, 260a, 560a, 660a) de l'aimant ; et
une deuxième partie de support d'aimant (184, 284, 584, 684) faisant saillie depuis la première partie de support d'aimant pour supporter une surface latérale (160b, 260b, 560b, 660b) de l'aimant.

7. Machine à laver selon la revendication 6, dans laquelle la deuxième partie de support d'aimant (684) a une largeur allant progressivement en augmentant dans une direction faisant saille de la deuxième partie de support d'aimant ;
et/ou dans laquelle l'aimant est mis en ouvre au niveau d'une surface latérale de celle-ci avec une partie inclinée (662) supportée par la deuxième partie de support d'aimant ;
et/ou comportant par ailleurs une troisième partie de support d'aimant (186) faisant saillie depuis une surface intérieure de la deuxième partie de support d'aimant pour supporter l'autre surface majeure de l'aimant (160c) à l'opposé d'une surface majeure de l'aimant,
dans laquelle l'aimant peut être mis en ouvre au niveau de la surface latérale de celle-ci avec une partie étagée (164) supportée par la troisième partie de support d'aimant.

8. Machine à laver selon l'une quelconque des revendications précédentes, dans laquelle :
la partie d'attache d'élément de fixation comporte au moins une partie saillante d'attache (194) faisant saillie depuis la partie extérieure du logement de compensateur d'équilibrage ; et
la partie d'accouplement d'élément de fixation d'aimant comporte au moins un crochet d'attache (384) accouplé à la partie saillante d'attache.

9. Machine à laver selon la revendication 8, comportant par ailleurs au moins une rainure d'attache (195) formée en coupant au moins une partie de la partie saillante d'attache,
dans laquelle la partie d'accouplement d'élément de fixation d'aimant comporte au moins une nervure d'attache (382) accouplée à la rainure d'attache.

10. Machine à laver selon la revendication 9, dans laquelle la nervure d'attache (382) et le crochet d'attache (384) sont disposés au niveau de chaque extrémité de l'élément de fixation d'aimant.

11. Machine à laver selon la revendication 10, comportant par ailleurs une nervure de connexion (386) s'étendant depuis une extrémité de l'élément de fixation d'aimant dans une direction allant dans le sens de la circonférence de l'élément de fixation d'aimant pour connecter une extrémité de l'élément de fixation d'aimant à la nervure d'attache,
dans laquelle la nervure d'attache et le crochet d'attache peuvent s'étendre depuis la nervure de connexion dans une direction dans laquelle l'élément de fixation d'aimant est accouplé au logement de compensateur d'équilibrage.

12. Machine à laver selon la revendication 1, dans laquelle :
la partie d'attache d'élément de fixation (197) est formée en une forme correspondant à une forme externe de l'élément de fixation d'aimant (580) ; et
au moins une rainure d'attache d'élément de fixation (198) est mise en oeuvre au niveau de la partie d'attache d'élément de fixation,
dans laquelle la partie d'accouplement d'élément de fixation d'aimant comporte au moins un crochet d'attache d'élément de fixation (588) accouplé à la rainure d'attache d'élément de fixation.

13. Machine à laver selon la revendication 12, dans laquelle l'élément de fixation d'aimant (580) comporte une première partie de support d'aimant (582) pour supporter une surface majeure (560a) de l'aimant (560) et une deuxième partie de support d'aimant (584) faisant saillie depuis la première partie de support d'aimant pour supporter une surface latérale (560b) de l'aimant, et
le crochet d'attache d'élément de fixation (588) s'étend depuis une extrémité de la deuxième partie de support d'aimant dans une direction dans laquelle l'élément de fixation d'aimant est accouplé au logement de compensateur d'équilibrage ;
et/ou dans laquelle l'élément de fixation d'aimant comporte une pluralité de crochets de fixation d'aimant (586) pour fixer ledit au moins un aimant reçu dedans, et
les crochets de fixation d'aimant sont agencés le long de la deuxième partie de support d'aimant selon des intervalles.

14. Machine à laver selon la revendication 1, dans laquelle :
la partie d'attache d'élément de fixation comporte au moins un crochet d'attache (196) faisant saillie depuis une surface extérieure du logement de compensateur d'équilibrage,
dans laquelle la partie d'accouplement d'élément de fixation d'aimant comporte au moins un trou d'attache (484), auquel le crochet d'attache est accouplé, dans laquelle l'élément de fixation d'aimant peut comporter une pluralité de parties d'extension (482) s'étendant depuis des extrémités opposées de celui-ci dans une direction allant dans le sens de la circonférence de l'élément de fixation d'aimant, et
le trou d'attache est formé au travers de chacune des parties d'extension.

15. Machine à laver selon l'une quelconque des revendications précédentes, dans laquelle l'élément de fixation d'aimant (180) comporte un boîtier d'aimant servant à recevoir l'aimant.
